# EUROPEAN PATENT SPECIFICATION

(11) **EP 0 980 971 B1**
(45) Date of publication and mention of the grant of the patent: **29.12.2004**
(21) Application number: 99116285.0
(22) Date of filing: 18.08.1999
(51) Int. Cl.: F02D 21/08

(54) **Internal combustion engine**
Brennkraftmaschine
Moteur à combustion interne

(30) Priority: 19.08.1998 JP 23312598; 21.10.1998 JP 29991798
(43) Date of publication of application: 23.02.2000
(73) Proprietor: TOYOTA JIDOSHA KABUSHIKI KAISHA, Toyota-shi, Aichi-ken 471-8571 (JP)
(72) Inventor: Ito, Takekazu, Toyota-shi, Aichi-ken, 471-8571 (JP); Sasaki, Shizuo, Toyota-shi, Aichi-ken, 471-8571 (JP); Abe, Tsukasa, Toyota-shi, Aichi-ken, 471-8571 (JP); Yoshizaki, Kouji, Toyota-shi, Aichi-ken, 471-8571 (JP); Murata, Hiroki, Toyota-shi, Aichi-ken, 471-8571 (JP); Gotoh, Masato, Toyota-shi, Aichi-ken, 471-8571 (JP)
(74) Representative: Pellmann, Hans-Bernd, Dipl.-Ing.

(56) References cited:
- EP-A- 0 803 645
- EP-A- 0 896 141
- DE-A- 4 333 424
- FR-A- 2 752 267
- GB-A- 2 317 715
- YANAGIHARA H ET AL: "A STUDY OF DI DIESEL COMBUSTION UNDER UNIFORM HIGHER-DISPERSED MIXTURE FORMATION" JSAE REVIEW, SOCIETY OF AUTOMOTIVE ENGINEERS OF JAPAN, TOKYO, JP, vol. 18, no. 3, July 1997 (1997-07), pages 247-254, XP000979665 ISSN: 0389-4304

## Description

### BACKGROUND OF THE INVENTION

### 1. FIELD OF THE INVENTION

The present invention relates to an internal combustion engine according to the preamble of claim 1, which has a combustion chamber into which inactive gas is introduced so as to cause combustion. (Compare with EP-A-896 141.)

### 2. DESCRIPTION OF THE RELATED ART

Conventionally, in an internal combustion engine such as a diesel engine, an engine exhaust passage and an engine intake passage are connected with each other by an exhaust gas recirculation (hereinafter referred to as EGR) passage. Exhaust gas, namely, EGR gas is recirculated into the engine intake passage via the EGR passage. In this case, the EGR gas has a relatively high specific heat and is able to absorb a large amount of heat. Hence, as the amount of EGR gas is increased, that is, as the EGR rate (the amount of EGR gas / the amount of EGR gas + the amount of intake air) is increased, the combustion temperature in a combustion chamber decreases. If the combustion temperature decreases, the generation amount of NOx is reduced. Thus, the larger the EGR rate becomes, the smaller the generation amount of NOx becomes.

As described hitherto, it has been conventionally known that the generation amount of NOx is reduced by increasing the EGR rate. However, in the process of increasing the EGR rate, when the EGR rate exceeds a certain threshold value, the generation amount of soot, namely, smoke starts increasing abruptly. In this respect, it was conventionally considered that if the EGR rate is increased beyond a certain threshold value, the amount of smoke increases endlessly. In other words, the EGR rate at which the amount of smoke starts increasing abruptly is considered to be a maximum allowable value of the EGR rate.

Accordingly, the EGR rate is set below the maximum allowable value. Although the maximum allowable value of the EGR rate differs greatly depending on a type of the engine or fuel, it is approximately 30 to 50%. Therefore, in the diesel engine, the EGR rate is at most set to 30 to 50%.

As described above, it has been conventionally considered that the EGR rate has a maximum allowable value. Thus, the EGR rate is set so as to reduce a generation amount of NOx to the maximum possible extent, on condition that the EGR rate does not exceed the maximum allowable value. However, even if the EGR rate has been thus determined, the generation amount of NOx cannot be reduced limitlessly. In fact, the generation of a comparative amount of NOx is inevitable.

However, the following fact has been discovered in the course of studies on combustion in diesel engines: That is, as described above, if the EGR rate is made larger than the maximum allowable value, the generation amount of smoke increases abruptly. However, the generation amount of smoke has its peak. If the EGR rate is further increased after the generation amount of smoke has reached its peak, the generation amount of smoke then starts decreasing abruptly. If the EGR rate is set to 70% or more during an idling operation, or if the EGR rate is set to about 55% or more in the case where EGR gas is cooled intensively, NOx is hardly generated and the generation amount of smoke becomes almost zero. Namely, soot is hardly generated. Thereafter, based on this discovery, further studies have been conducted on the reason why soot is hardly generated. As a result, a novel unprecedented combustion system capable of reducing soot and NOx simultaneously has been constructed. This novel combustion system will be explained later in detail. In short, this combustion system is based on the idea that the growth of hydrocarbon is stopped before it grows up to become soot.

In other words, it has been revealed by repeated experiments and studies that if the temperature of fuel and ambient gas in the combustion chamber during combustion is equal to or lower than a certain temperature, the growth of hydrocarbon is stopped before it becomes soot, and that if the temperature of fuel and ambient gas becomes higher than the aforementioned certain temperature, the hydrocarbon rapidly grows up to become soot. In this case, the temperature of fuel and ambient gas is greatly affected by the endothermic effect of the gas surrounding fuel at the time of fuel combustion. If the endothermic value of the gas surrounding the fuel is adjusted in accordance with an exothermic value during the fuel combustion, the temperature of fuel and ambient gas can be controlled.

Accordingly, if the temperature of fuel and ambient gas in the combustion chamber during combustion is set equal to or lower than a temperature at which the growth of hydrocarbon is stopped halfway, no soot is generated. The temperature of fuel and ambient gas in the combustion chamber during combustion can be set equal to or lower than a temperature at which the growth of hydrocarbon is stopped halfway, by adjusting an endothermic value of the gas surrounding fuel. On the other hand, the hydrocarbon that has stopped growing before becoming soot can be cleaned easily by means of a posttreatment that uses an oxidizing catalyst or the like. This is the basic concept of a novel combustion system. The present applicant has already applied for a patent for an internal combustion engine employing the novel combustion system, under the application number of EP 879,946 A2.

In this novel combustion system, the EGR rate is about 55% or more, and the air-fuel ratio is relatively low. In the aforementioned internal combustion engine, the EGR rate is set to a target value higher than 55% by controlling an opening degree of an EGR control valve provided in the EGR passage, and the air-fuel ratio is set relatively low by controlling an opening degree of a throttle valve provided in the intake passage.

However, the EGR rate can be set to about 55% or more only when the amount of intake air is small. That is, if the amount of intake air exceeds a certain value, the new combustion cannot be carried out. Therefore, if the amount of intake air has exceeded the certain value, there is no choice but to perform the conventionally employed combustion.

The new combustion is carried out under a smaller air-fuel ratio in comparison with the conventionally adopted combustion. Therefore, the air-fuel ratio needs to be increased stepwise in switching from the new combustion to the conventionally adopted combustion. Conversely, the air-fuel ratio needs to be reduced stepwise in switching from the conventionally adopted combustion to the new combustion. However in this case, after a switch operation has been performed between the new combustion and the conventionally adopted combustion, the amount of air contained in EGR gas has a great effect on the air-fuel ratio. That is, if the EGR gas contains a large amount of air, the air-fuel ratio after the switching operation becomes large. If the EGR gas contains a small amount of air, the air-fuel ratio after the switching operation becomes small. Therefore, in order to change the air-fuel ratio stepwise toward its target value after the switching operation between the new combustion and the conventionally adopted combustion, it is indispensable to consider an amount of air contained in EGR gas.

When the new combustion is carried out, the opening degrees of the throttle valve and the EGR control valve are controlled to predetermined respective target values so that the EGR rate assumes its large target value and the air-fuel ratio assumes its small target value. Hence, when the new combustion is carried out, the air-fuel ratio is maintained at its small target value, so that the EGR gas contains only a small amount of air.

Conversely, when the conventionally adopted combustion is carried out, the opening degrees of the throttle valve and the EGR control valve are controlled to predetermined respective target values so that the EGR rate assumes its small target value and the air-fuel ratio assumes its large target value. Hence, when the conventionally adopted combustion is carried out, the air-fuel ratio is maintained at its large target value, so that the EGR gas contains a large amount of air.

In switching from the new combustion to the conventionally employed combustion, the opening degrees of the throttle valve and the EGR control valve are set to their target values suited for the conventionally employed combustion so as to increase the air-fuel ratio. However at this time, the EGR gas contains only a small amount of air. Therefore, the average air-fuel ratio of the mixture in the combustion chamber does not rise significantly. If the mixture then burns and the burnt gas is discharged into the exhaust passage, the amount of air in the EGR gas slightly increases. Thus, if the EGR gas is recirculated, the average air-fuel ratio of the mixture in the combustion chamber slightly increases. In this manner, the average air-fuel ratio of the mixture in the combustion chamber gradually approaches the target air-fuel ratio.

In other words, even if the new combustion is switched to the conventionally employed combustion, the air-fuel ratio does not change stepwise toward its target value. Instead, the air-fuel ratio gradually changes toward its target value. As a result, after the new combustion has been switched to the conventionally employed combustion, the air-fuel ratio deviates from its target value for a while. Consequently, there is caused a problem of inability to cause good combustion. There is even a danger that smoke is generated.

The same phenomenon occurs in switching from the conventionally employed combustion to the new combustion. That is, in switching from the conventionally employed combustion to the new combustion, the opening degrees of the throttle valve and the EGR control valve are set to their respective target values suited for the new combustion. However at this time, the EGR gas contains a large amount of air. Therefore, the average air-fuel ratio of the mixture in the combustion chamber does not drop significantly. If the mixture then burns and the burnt gas is discharged into the exhaust passage, the amount of air in EGR gas slightly decreases. Thus, if the EGR gas is recirculated, the average air-fuel ratio of the mixture in the combustion chamber slightly decreases. In this manner, the average air-fuel ratio of the mixture in the combustion chamber gradually approaches the target air-fuel ratio.

In other words, even if the conventionally employed combustion is switched to the new combustion, the air-fuel ratio does not change stepwise toward its target value. Instead, the air-fuel ratio gradually changes toward its target value. As a result, after the conventionally employed combustion has been switched to the new combustion, the air-fuel ratio deviates from its target value for a while. Consequently, there is caused a problem of inability to cause good combustion. There is even a danger that smoke is generated.

### SUMMARY OF THE INVENTION

It is an object of the present invention to make the air-fuel ratio approach its target value immediately after a switching operation between new combustion and conventionally employed combustion, while preventing both soot (smoke) and NOx from being discharged from an internal combustion engine.

The above object is solved by combination of features of the main claim. The subclaims disclose further advantageous embodiments of the invention.

In the present invention, there is provided an internal combustion engine wherein with increases in amount of exhaust gas recirculated into a combustion chamber, a generation amount of soot gradually increases and reaches its peak, and wherein with further increases in amount of exhaust gas recirculated into the combustion chamber, a temperature of fuel and ambient gas in the combustion chamber during combustion becomes lower than a temperature of generation of soot so that soot is hardly generated. This internal combustion is provided with a throttle valve for controlling an amount of air supplied into the combustion chamber and an exhaust gas recirculation control valve for controlling an amount of exhaust gas recirculated into the combustion chamber. By changing an opening degree of at least one of the throttle valve and the exhaust gas recirculation control valve, first combustion and second combustion are selectively switched. During the first combustion, the combustion chamber contains exhaust recirculation gas of an amount larger than that corresponding to a peak generation amount of soot, and soot is hardly generated. During the second combustion, the combustion chamber contains exhaust recirculation gas of an amount smaller than that corresponding to the peak generation amount of soot. Upon switching from the first combustion to the second combustion, opening degrees of the throttle valve and the exhaust gas recirculation control valve are set to predetermined target opening degrees. In this internal combustion engine, upon switching from the first combustion to the second combustion, the opening degree of at least one of the throttle valve and the exhaust gas recirculation control valve is temporarily shifted with respect to the target opening degree in such a direction as to increase an air-fuel ratio in the combustion chamber, and thereafter set to the target opening degree.

That is, upon switching from the first combustion to the second combustion, if the opening degree of at least one of the throttle valve and the exhaust gas recirculation control valve is temporarily shifted with respect to the target opening degree in such a direction as to increase an air-fuel ratio in the combustion chamber, the air-fuel ratio immediately reaches a target air-fuel ratio even when the recirculated exhaust gas contains a small amount of air.

Although this summary does not describe all the features of the present invention, it should be understood that any combination of the features stated in the dependent claims is within the scope of the present invention.

### BRIEF DESCRIPTION OF THE DRAWINGS

The foregoing and further objects, features and advantages of the present invention will become apparent from the following description of preferred embodiments with reference to the accompanying drawings, wherein:
Fig. 1 is a general view of a compression ignition type internal combustion engine according to the present invention;
Fig. 2 shows changes in generation amounts of smoke, HC, CO and NOx in conjunction with changes in output torque and air-fuel ratio;
Figs. 3A and 3B show combustion pressures;
Fig. 4 shows molecules of fuel;
Fig. 5 shows a relationship between generation amount of smoke and EGR rate;
Fig. 6 shows a relationship between total amount of intake gas and load requirement;
Fig. 7 shows a first operational area I and a second operational area II;
Fig. 8 shows outputs of an air-fuel ratio sensor;
Fig. 9 shows opening degree of the throttle valve, opening degree of the EGR control valve, EGR rate, air-fuel ratio, injection timing and injection amount corresponding to load requirement;
Figs. 10 shows air-fuel ratio in the first operational area I;
Figs. 11A and 11B show maps of target opening degree of the throttle valve and the like;
Fig. 12 shows air-fuel ratio during the second combustion;
Figs. 13A and 13B show maps of target opening degree of the throttle valve and the like;
Fig. 14 shows changes in opening degree of the throttle valve and the EGR control valve;
Fig. 15 shows a length of time At.
Fig. 16 shows changes in opening degree of the throttle valve and the EGR control valve;
Fig. 17 shows changes in opening degree of the throttle valve and the EGR control valve;
Fig. 18 is a flowchart for controlling operation of the engine;
Fig. 19 shows changes in opening degree of the throttle valve and the EGR control valve;
Fig. 20 shows changes in opening degree of the throttle valve and the EGR control valve;
Fig. 21 shows changes in opening degree of the throttle valve and the EGR control valve;
Fig. 22 is a flowchart for controlling operation of the engine;
Fig. 23 shows changes in opening degree of the throttle valve and the EGR control valve;
Fig. 24 shows changes in opening degree of the throttle valve and the EGR control valve;
Fig. 25 shows changes in opening degree of the throttle valve and the EGR control valve;
Fig. 26 is a flowchart for controlling operation of the engine; and
Fig. 27 is a plan view of the internal combustion engine shown in Fig. 1.

### DESCRIPTION OF THE PREFERRED EMBODIMENT

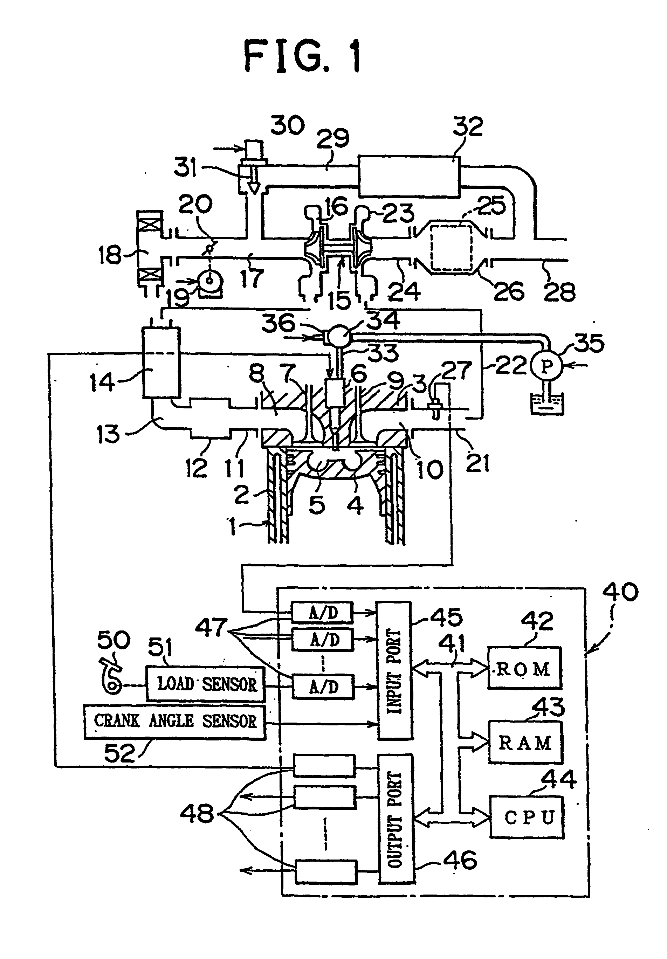

Fig. 1 shows an embodiment where the present invention is applied to a four-stroke compression ignition type internal combustion engine.

Referring to Fig. 1, reference numerals 1, 2, 3, 4, 5, 6, 7, 8, 9 and 10 denote an engine body, a cylinder block, a cylinder head, a piston, a combustion chamber, an electrically controlled fuel injection valve, an intake valve, an intake port, an exhaust valve and an exhaust port respectively. The intake port 8 is connected to a surge tank 12 via a corresponding intake branch pipe 11. The surge tank 12 is connected to an outlet portion of a compressor 16 of a supercharger such as an exhaust turbocharger 15 via an intake duct 13 and an inter cooler 14. An inlet portion of the compressor 16 is connected to an air cleaner 18 via an air suction pipe 17. Disposed in the air suction pipe 17 is a throttle valve 20, which is driven by a step motor 19.

On the other hand, the exhaust port 10 is connected to an inlet portion of an exhaust turbine 23 of the exhaust turbocharger 15 via an exhaust manifold 22. An outlet portion of the exhaust turbine 23 is connected to a catalytic converter 26 incorporating a catalyst 25 functioning as an oxidizer. An air-fuel ratio sensor 27 is disposed in an exhaust manifold 21.

An exhaust pipe 28 connected to an outlet portion of the catalytic converter 26 and the air suction pipe 17 downstream of the throttle valve 20 are coupled to each other via an exhaust gas recirculation (hereinafter, referred to as EGR) passage 29. Disposed in the EGR passage 29 is an EGR control valve 31, which is driven by a step motor 30. Furthermore, an inter cooler 32 for cooling EGR gas flowing through the EGR passage 29 is disposed in the EGR passage 29. In the embodiment shown in Fig. 1, engine coolant is introduced into the inter cooler 32 so as to cool EGR gas.

On the other hand, the fuel injection valve 6 is connected to a fuel reservoir, i.e., a so-called common rail 34 via a fuel feed pipe 33. Fuel is supplied to the common rail 34 from an electrically controlled fuel pump 35, whose discharge amount is variable. The fuel supplied to the common rail 34 is supplied to the fuel injection valve 6 via each fuel feed pipe 33. Installed in the common rail 34 is a fuel pressure sensor 36 for detecting a fuel pressure in the common rail 34. Based on an output signal from the fuel pressure sensor 36, the discharge amount of the fuel pump 35 is controlled such that the fuel pressure in the common rail 34 becomes a target fuel pressure.

An electronic control unit 40 is composed of a digital computer and provided with a ROM (read only memory) 42, a RAM (random access memory) 43, a CPU (microprocessor) 44, an input port 45 and an output port 46, which are interconnected with one another by a bi-directional bus 41. Output signals from the air-fuel ratio sensor 27 and the fuel pressure sensor 36 are also inputted to the input port 45 via corresponding AD converters 47 respectively. A load sensor 51 is connected to an accelerator pedal 50. The load sensor 51 generates an output voltage proportional to a depression amount L of the accelerator pedal 50. The output voltage of the load sensor 51 is inputted to the input port 45 via a corresponding AD converter 47. Furthermore, a crank angle sensor 52 is connected to the input port 45. The crank angle sensor 52 generates an output pulse every time a crank shaft rotates, for example, by 30°. The engine speed is calculated based on an output value of the crank angle sensor 52. On the other hand, the output port 46 is connected to the fuel injection valve 6, the step motor 19 for controlling the throttle valve, the step motor 30 for controlling the EGR control valve and the fuel pump 35 via a corresponding driving circuit 48.

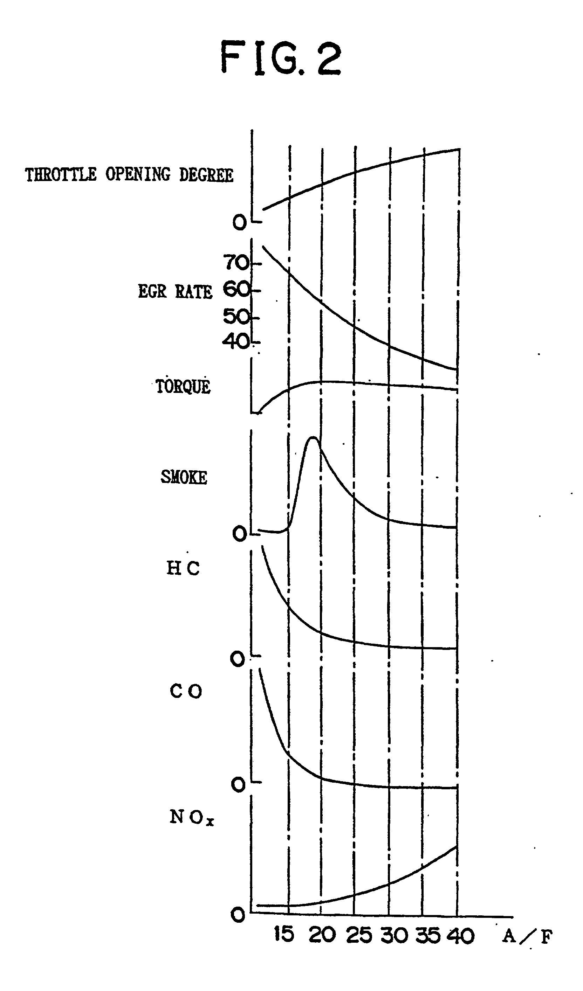

Fig. 2 shows an experimental example indicating changes in output torque and changes in discharge amount of smoke, HC, CO and NOx when the air-fuel ratio A/F (indicated by an axis of abscissa in Fig. 2) is changed by changing an opening degree of the throttle valve 20 and an EGR rate during a low-load operation of the engine. As can be seen from Fig. 2, in this experimental example, the smaller the air-fuel ratio A/F becomes, the larger the EGR rate becomes. When the air-fuel ratio A/F is equal to or smaller than a stoichiometric air-fuel ratio (about 14.6), the EGR rate is equal to or higher than 65%.

As shown in Fig. 2, if the air-fuel ratio A/F is made smaller by increasing the EGR rate, the generation amount of smoke starts increasing when the EGR rate reaches about 40% and the air-fuel ratio A/F reaches about 30. Then, if the air-fuel ratio A/F is made smaller by further increasing the EGR rate, the generation amount of smoke increases abruptly and reaches its peak. Then, if the air-fuel ratio A/F is made smaller by further increasing the EGR rate, the generation amount of smoke drops abruptly. When the EGR rate is equal to or higher than 65% and the air-fuel ratio A/F approaches 15.0, the generation amount of smoke becomes almost zero. That is, soot is hardly generated. At this time, the output torque of the engine drops slightly, and the generation amount of NOx becomes comparatively low. On the other hand, the generation amounts of HC and CO start increasing.

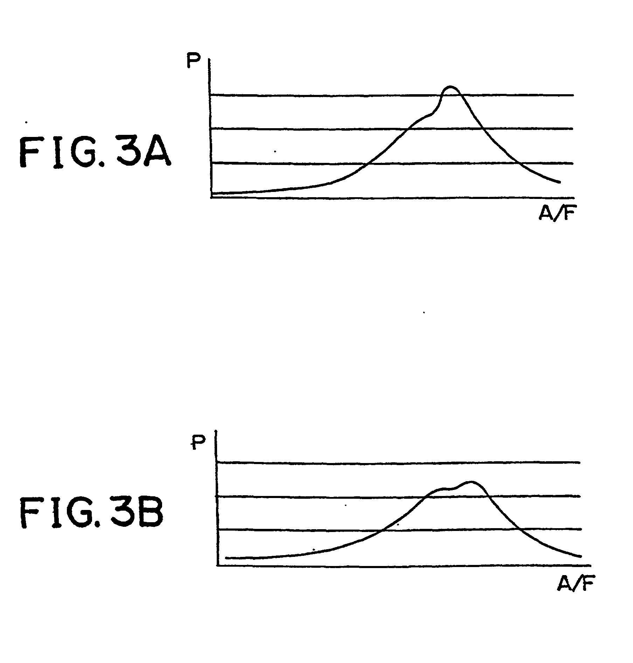

Fig. 3A shows changes in fuel pressure in the combustion chamber 5 when the air-fuel ratio A/F is in the vicinity of 18 and the generation amount of smoke assumes its maximum value. Fig. 3B shows changes in fuel pressure in the combustion chamber when the air-fuel ratio A/F is in the vicinity of 13 and the generation amount of smoke is almost zero. As is apparent from the comparison of Fig. 3A with Fig. 3B, the fuel pressure is lower in the case where the generation amount of smoke is almost zero as shown in Fig. 3B than in the case where the generation amount of smoke is large as shown in Fig. 3A.

The following can be concluded from the experimental results shown in Figs. 2 and 3. That is, first of all, when the air-fuel ratio A/F is equal to or smaller than 15.0 and the generation amount of smoke is almost zero, the generation amount of NOx drops drastically, as can be seen from Fig. 2. The fact that the generation amount of NOx has dropped means that the combustion temperature in the combustion chamber 5 has dropped. Accordingly, when soot is hardly generated, it can be concluded that the combustion temperature in the combustion chamber 5 is low. The same conclusion can also be drawn from Fig. 3. That is, the combustion pressure is low in a state shown in Fig. 3B where soot is hardly generated. Therefore, at this time, it can be concluded that the combustion temperature in the combustion chamber 5 is low.

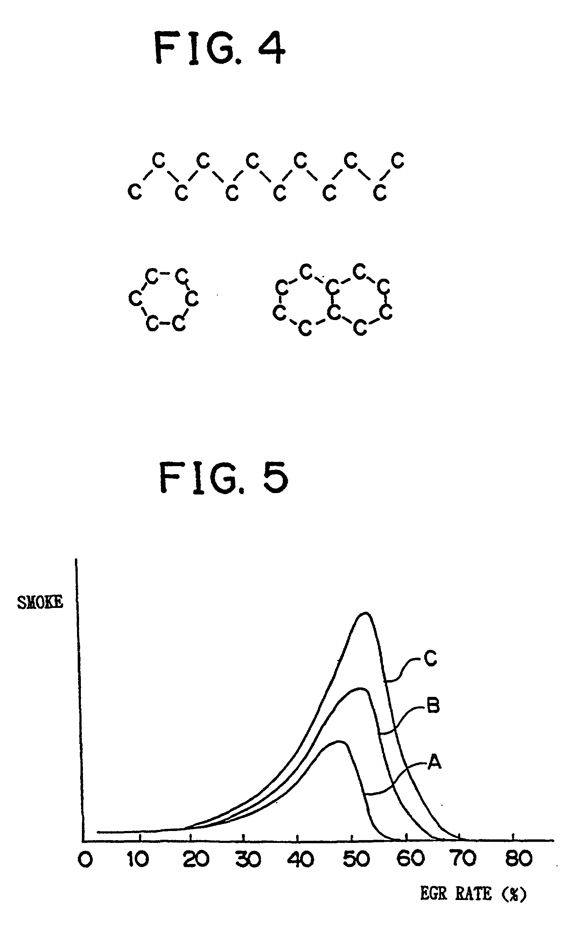

Secondly, as shown in Fig. 2, when the generation amount of smoke, namely, the generation amount of soot becomes almost zero, the discharge amounts of HC and CO increase. This means that hydrocarbon is discharged before growing up to become soot. In other words, the linear hydrocarbon or aromatic hydrocarbon contained in fuel as shown in Fig. 4 is thermally decomposed when heated in a state of oxygen deficiency, and a precursor of soot is formed. Then, soot that is composed of a solid body of assembled carbon atoms is produced. In this case, the actual process in which soot is produced is complicated, and it is unclear what state the precursor of soot assumes. In any case, the hydrocarbon as shown in Fig. 4 grows up to become soot through the precursor of soot. Accordingly, as described above, when the generation amount of soot becomes almost zero, the discharge amounts of HC and CO increase as shown in Fig. 2. At this time, HC is either the precursor of soot or hydrocarbon in a state prior to the precursor of soot.

The above-described studies based on the experimental results shown in Figs. 2 and 3 are summarized as follows. That is, when the combustion temperature in the combustion chamber 5 is low, the generation amount of soot is almost zero. At this time, the precursor of soot or hydrocarbon in a state prior to the precursor of soot is discharged from the combustion chamber 5. As a result of more elaborate experiments and studies on this subject, it has been revealed that the growing process of soot is stopped halfway, that is, no soot is generated in the case where the temperature of fuel and ambient gas in the combustion chamber 5 is equal to or lower than a certain temperature. When the temperature of fuel and ambient gas in the combustion chamber 5 becomes equal to or higher than the certain temperature, soot is generated.

The temperature of fuel and ambient gas at the time of stoppage of the process of producing hydrocarbon in a state prior to the precursor of soot, that is, the aforementioned certain temperature changes depending on various factors such as the type of fuel, air-fuel ratio, compression ratio and the like. Accordingly, it is impossible to mention a concrete value of the aforementioned certain temperature. However, the aforementioned certain temperature is closely related to the generation amount of NOx and thus can be limited to a certain range judging from the generation amount of NOx. In other words, the larger the EGR rate becomes, the lower the temperature of fuel and ambient gas during combustion becomes. The larger the EGR rate becomes, the smaller the generation amount of NOx becomes. In this case, when the generation amount of NOx becomes about 10ppm or less, soot is hardly generated. Accordingly, the aforementioned certain temperature virtually coincides with a temperature at which the generation amount of NOx becomes about 10ppm or less.

Once soot has been produced, the soot cannot be cleaned by means of a posttreatment using a catalyst functioning as an oxidizer. Conversely, the precursor of soot or hydrocarbon in a state prior to the precursor of soot can be cleaned easily by means of a posttreatment using a catalyst functioning as an oxidizer. If such a posttreatment using the catalyst functioning as an oxidizer is taken into account, there is a great difference between the case where hydrocarbon is discharged from the combustion chamber 5 as the precursor of soot or in a state prior to the precursor of soot and the case where hydrocarbon is discharged from the combustion chamber 5 as soot. The important features of the novel combustion system employed in the present invention are that hydrocarbon is discharged from the combustion chamber 5 as the precursor of soot or in a state prior to the precursor of soot without producing soot in the combustion chamber 5 and that the hydrocarbon is oxidized by means of the catalyst functioning as an oxidizer.

In order to stop the growth of hydrocarbon in a state prior to the production of soot, it is necessary to keep fuel and ambient gas in the combustion chamber 5 during combustion lower than a temperature at which soot is produced. In this case, it has been revealed that the endothermic effect of ambient gas at the time of fuel combustion has an enormous effect in limiting the temperature of the fuel and ambient gas.

In other words, if there is only air around fuel, the evaporated fuel immediately reacts with oxygen in the air and burns. In this case, the temperature of the air that is away from the fuel does not rise considerably, and only the air surrounding the fuel locally reaches a very high temperature. Namely, at this time, the air that is away from the fuel is hardly subjected to the endothermic effect of the combustion heat of the fuel. In this case, since the combustion temperature locally becomes very high, the unburnt hydrocarbon that has received the combustion heat produces soot.

On the other hand, if there is fuel in the mixture of a large amount of inactive gas and a small amount of air, things are slightly different. In this case, the evaporated fuel is diffused all around, reacts with the oxygen intermingled in the inactive gas, and burns. In this case, since the inactive gas in the periphery absorbs combustion heat, the combustion temperature does not rise significantly. That is, the combustion temperature can be limited to a low temperature. Namely, the presence of inactive gas plays an important role in limiting the combustion temperature, and the endothermic effect of the inactive gas makes it possible to limit the combustion temperature to a low temperature.

In this case, in order to keep fuel and ambient gas lower than a temperature at which soot is produced, a sufficient amount of inactive gas that can absorb heat of an amount sufficient to achieve such a purpose is required. Therefore, if the amount of fuel increases, the required amount of inactive gas increases correspondingly. In this case, the larger the specific heat of inactive gas becomes, the larger the endothermic effect thereof becomes. Hence, it is preferable that the specific heat of the inactive gas be large. From this standpoint, since CO₂ or EGR gas has a relatively large specific heat, it is preferable to use EGR gas as inactive gas.

Fig. 5 shows a relationship between EGR rate and smoke in the case where EGR gas is used as inactive gas and the cooling degree of the EGR gas is changed. That is, referring to Fig. 5, a curve A represents a case where EGR gas is maintained at about 90°C by cooling the EGR gas intensively, a curve B represents a case where EGR gas is cooled by a compact cooling system, and a curve C represents a case where EGR gas is not cooled forcibly.

As indicated by the curve A in Fig. 5, in the case where EGR gas is cooled intensively, the generation amount of soot reaches its peak when the EGR rate is slightly lower than 50%. In this case, if the EGR rate is set to about 55% or more, soot is hardly generated. On the other hand, as indicated by the curve B shown in Fig. 5, in the case where EGR gas is slightly cooled, the generation amount of soot reaches its peak when the EGR rate is slightly higher than 50%. In this case, if the EGR rate is set to about 65% or more, soot is hardly generated.

Furthermore, as indicated by the curve C in Fig. 5, in the case where EGR gas is not cooled forcibly, the generation amount of soot reaches its peak when the EGR rate is in the vicinity of 55%. In this case, if the EGR rate is set to about 70% or more, soot is hardly generated.

Fig. 5 shows a generation amount of smoke when the engine load is relatively high. As the engine load becomes lower, the EGR rate corresponding to a peak generation amount of soot decreases slightly. At this time, the lower limit value of the EGR rate where soot is hardly generated also decreases slightly. Thus, the lower limit value of the EGR rate where soot is hardly generated changes depending on a cooling degree of EGR gas or an engine load.

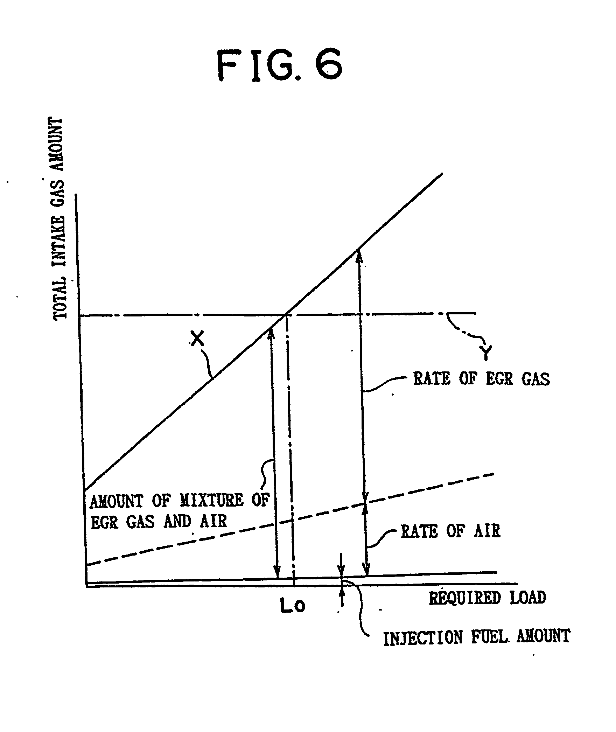

Fig. 6 shows an amount of the mixture of EGR gas and air and a proportion of air to EGR gas in the mixture that are necessary to keep fuel and ambient gas during combustion lower than a temperature at which soot is generated, in the case where EGR gas is used as inactive gas. Referring to Fig. 6, the axis of ordinate represents a total amount of intake gas admitted into the combustion chamber 5, and an alternate long and short dash line Y represents a total amount of intake gas that can be admitted into the combustion chamber 5 when the supercharging operation is not performed. Further, the axis of abscissa represents a load requirement.

Referring to Fig. 6, the proportion of air, namely, the amount of air in the mixture represents an amount of air that is necessary for complete combustion of injected fuel. That is, in the case shown in Fig. 6, the ratio of the amount of air to the amount of injected fuel is equal to the stoichiometric air-fuel ratio. On the other hand, in Fig. 6, the proportion of EGR gas, namely, the amount of EGR gas in the mixture represents a minimum amount of EGR gas that is necessary to keep fuel and ambient gas lower than a temperature at which soot is formed. The aforementioned amount of EGR gas corresponds to an EGR rate of about 55% or more. In the embodiment shown in Fig. 6, the EGR rate is equal to or higher than 70%. Namely, in the case where the total amount of intake gas admitted into the combustion chamber 5 is represented by a solid line X in Fig. 6 and the ratio of the amount of air to the amount of EGR gas is set as shown in Fig. 6, the temperature of fuel and ambient gas becomes lower than a temperature at which soot is produced, and no soot is generated. At this time, the generation amount of NOx is about 10ppm or less. Accordingly, the generation amount of NOx is very small.

If the amount of fuel injection increases, the exothermic value at the time of fuel combustion increases. Hence, in order to keep fuel and ambient gas lower than a temperature at which soot is generated, it is necessary to increase an amount of heat to be absorbed by EGR gas. Therefore, as shown in Fig. 6, the amount of EGR gas needs to be increased as the amount of fuel injection increases. In other words, it is necessary to increase an amount of EGR gas as the load requirement becomes higher.

In the case where a supercharging operation is not performed, the total amount X of intake gas admitted into the combustion chamber 5 has an upper limit of Y. Accordingly, in an area in Fig. 6 where the load requirement is larger than L₀, unless the proportion of EGR gas is reduced in accordance with an increase in load requirement, the air-fuel ratio cannot be maintained at the stoichiometric air-fuel ratio. In other words, in the case where the supercharging operation is not performed, if an attempt is made to maintain the air-fuel ratio at the stoichiometric air-fuel ratio in the area where the load requirement is larger than L₀, the EGR rate decreases with increases in load requirement. That is, in the area where the load requirement is larger than L₀, the temperature of fuel and ambient gas cannot be kept lower than a temperature at which soot is generated.

However, as shown in Fig. 1, if EGR gas is recirculated to an inlet side of the supercharger, namely, to the air suction pipe 17 of the exhaust turbocharger 15 via the EGR passage 29, in the area where the load requirement is larger than L₀, the EGR rate can be maintained at 55% or more, for example, at 70%. Thus, the temperature of fuel and ambient gas can be kept lower than a temperature at which soot is generated. That is, if EGR gas is recirculated so as to set the EGR rate in the air suction pipe 17 to, for example, 70%, the EGR rate of the intake gas that has been pressurized by the compressor 16 of the exhaust turbocharger 15 also becomes 70%. Until the pressurization by the compressor 16 reaches its limit, the temperature of fuel and ambient gas can be kept lower than a temperature at which soot is generated. Accordingly, it is possible to enlarge an operational area of the engine where low-temperature combustion can be carried out.

If the EGR rate is set to 55% or more in the area where the load requirement is larger than L₀, the EGR control valve 31 is opened completely and the throttle valve 20 is closed slightly.

As described previously, Fig. 6 shows a case where fuel bums under the stoichiometric air-fuel ratio. However, even if the amount of air is made smaller than that shown in Fig. 6, that is, even if the air-fuel ratio is made rich, it is possible to limit the generation amount of NOx to about 10ppm or less while preventing generation of soot. Further, even if the amount of air is made larger than that shown in Fig. 6, that is, even if the average of the air-fuel ratio is set to a lean value of 17 to 18, it is possible to limit the generation amount of NOx to about 10ppm or less while preventing generation of soot.

In other words, when the air-fuel ratio is made rich, the amount of fuel becomes excessive. However, since the combustion temperature is set low, a surplus of fuel does not grow up to become soot. Thus, no soot is generated. Further, at this time, the generation amount of NOx is very small. On the other hand, even when the average air-fuel ratio is lean or the air-fuel ratio is equal to the stoichiometric air-fuel ratio, if the combustion temperature becomes high, a small amount of soot is produced. However, according to the present invention, since the combustion temperature is set low, no soot is produced. Furthermore, the generation amount of NOx is also very small.

Thus, while the low-temperature combustion is carried out, no soot is generated and the generation amount of NOx is very small regardless of the air-fuel ratio, that is, regardless of whether the air-fuel ratio is rich, equal to the stoichiometric air-fuel ratio, or lean on average. Accordingly, from the standpoint of an enhancement in fuel consumption, it is preferable at this time to set the average air-fuel ratio lean.

Fuel and ambient gas in the combustion chamber during combustion can be kept equal to or lower than a temperature at which the growth of hydrocarbon is stopped halfway, only when the engine load is relatively low, that is, when the exothermic value of combustion is small. Therefore, according to the embodiment of the present invention, when the engine load is low or intermediate, fuel and ambient gas during combustion is kept lower than a temperature at which the growth of hydrocarbon is stopped halfway, and first combustion, namely, low-temperature combustion is carried out. When the engine load is high, second combustion, namely, conventionally adopted combustion is carried out. As is apparent from the foregoing description, when the first combustion, namely, the low-temperature combustion is carried out, the amount of inactive gas in the combustion chamber is larger than the amount of inactive gas corresponding to a peak generation amount of soot, so that soot is hardly generated. When the second combustion, namely, the conventionally adopted combustion is carried out, the amount of inactive gas in the combustion chamber is smaller than the amount of inactive gas corresponding to the peak generation amount of soot.

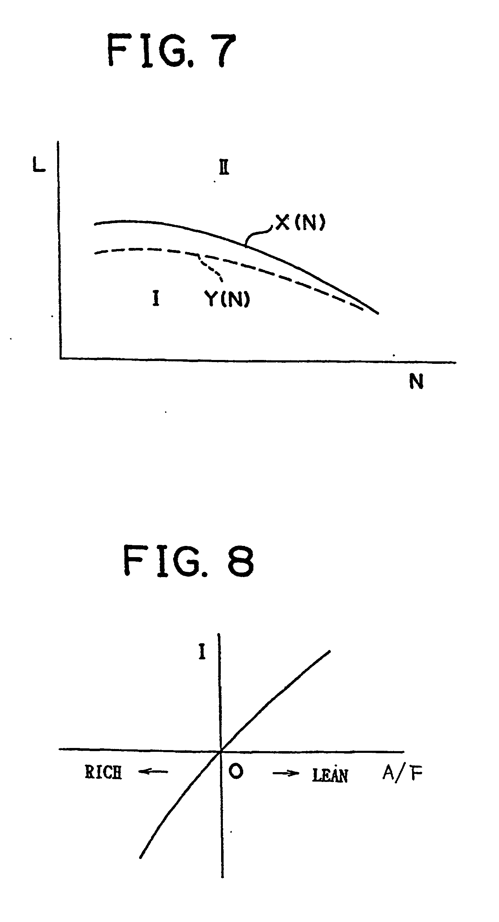

Fig. 7 shows a first operational area I corresponding to a first combustion mode where low-temperature combustion is carried out and a second operational area II corresponding to a second combustion mode where the conventionally adopted combustion is carried out. Referring to Fig. 7, the axis of ordinate L represents depression amount of the accelerator pedal 50, namely, a load requirement, and the axis of abscissa N represents engine speed. Furthermore, X(N) represents a first border between the first operational area I and the second operational area II, and Y(N) represents a second border between the first operational area I and the second operational area II. Based on the first border X(N), it is determined whether or not a transition from the first operational area I to the second operational area II has been made. Based on the second border Y(N), it is determined whether or not a transition from the second operational area II to the first operational area I has been made.

That is, when the engine is in the first operational area I and low-temperature combustion is carried out, if the load requirement L exceeds the first border X(N) which is a function of engine speed N, it is determined that a transition to the second operational area II has been made. Therefore, the conventionally adopted combustion is carried out. Then, if the load requirement L becomes lower than the second border Y(N) which is a function of engine speed N, it is determined that a transition to the first operational area I has been made. Therefore, the low-temperature combustion is carried out again.

The first reason why the first border X(N) and the second border Y(N) have been thus provided is that the combustion temperature is relatively high on the high-load side in the second operational area II and that the low-temperature combustion cannot be carried out immediately even if the load requirement L has become lower than the first border X(N). In other words, unless the load requirement L has become comparatively low and dropped below the second border Y(N), the low-temperature combustion cannot be started immediately. The second reason is that a hysteresis is to be set to eliminate fluctuations between the first operational area I and the second operational area II.

When the engine is in the first operational area I and the low-temperature combustion is carried out, soot is hardly generated. Instead, unburnt hydrocarbon is discharged from the combustion chamber 5 in the form of a precursor of soot or in a state prior to the precursor of soot. At this time, the unburnt hydrocarbon that has been discharged from the combustion chamber 5 is suitably oxidized by the catalyst 25 functioning as an oxidizer. It is to be noted herein that an oxidizing catalyst, a three-way catalyst or an NOx absorber can be employed as the catalyst 25. The NOx absorber has functions of absorbing NOx when the average air-fuel ratio in the combustion chamber 5 is lean and discharging the NOx when the average air-fuel ratio in the combustion chamber 5 becomes rich.

The NOx absorber has a carrier, for example, of alumina. Carried on this carrier are an alkaline metal such as potassium (K), sodium (Na), lithium (Li) and cesium (Cs), an alkaline earth metal such as barium (Ba) and calcium (Ca), at least one material selected from rare earth metals such as lanthanum (La) and yttrium (Y), and a noble metal such as platinum (Pt).

Not to mention the oxidizing catalyst, the three-way catalyst and the NOx absorber also function as an oxidizer. Accordingly, as described above, the three-way catalyst and the NOx absorber can be employed as the catalyst 25.

Fig. 8 shows output from the air-fuel ratio sensor 27. As can be understood from Fig. 8, the output current I of the air-fuel ratio sensor 27 changes in accordance with the air-fuel ratio A/F. Therefore, the air-fuel ratio can be known from the output current I of the air-fuel ratio sensor 27.

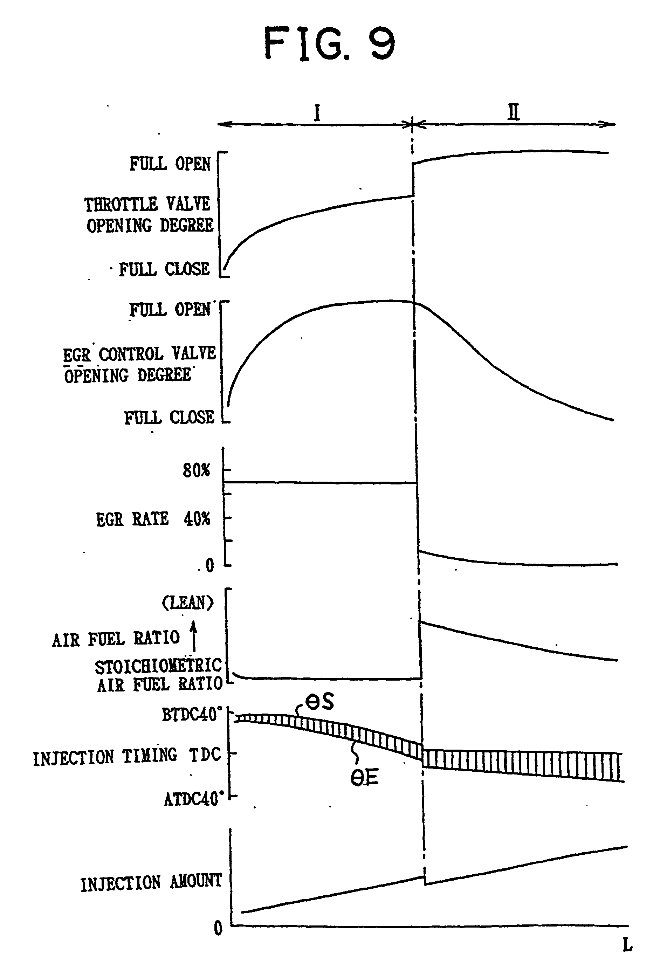

The outline of the operational control performed in the first operational area I and the second operational area II will now be explained with reference to Fig. 9.

Fig. 9 shows changes in opening degree of the throttle valve 20, opening degree of the EGR control valve 31, EGR rate, air-fuel ratio, injection timing and injection amount in accordance with changes in load requirement L. As shown in Fig. 9, in the first operational area I where the load requirement L is low, with increases in load requirement L, the opening degree of the throttle valve 20 gradually increases approximately from a completely closed state to a 2/3-open state. Furthermore, with increases in load requirement L, the opening degree of the EGR control valve 31 gradually increases approximately from a completely closed state to a completely open state. Furthermore, according to an example shown in Fig. 9, the EGR rate is about 70% in the first operational area I, and the air-fuel ratio is slightly lean.

In other words, the opening degrees of the throttle valve 20 and the EGR control valve 31 are controlled such that the EGR rate is about 70% and the air-fuel ratio is slightly lean in the first operational area I. Furthermore, in the first operational area I, fuel injection is carried out before the compression top dead center TDC. In this case, the injection start timing θS is retarded as the load requirement L becomes higher. Besides, the injection end timing θE is also retarded as the injection start timing θS is retarded.

During idling operation, the throttle valve 20 is adjusted to be closed almost completely, and the EGR control valve 31 is also adjusted to be closed almost completely. If the throttle valve 20 is adjusted to be closed almost completely, the pressure in the combustion chamber 5 at the beginning of compression becomes low. Hence, the compressive pressure becomes small. If the compressive pressure becomes small, the compressive work by means of the piston 4 becomes small, so that the vibration of the engine body 1 is reduced. In other words, during idling operation, in order to curb vibration of the engine body 1, the throttle valve 20 is adjusted to be closed almost completely.

On the other hand, if the engine undergoes a transition from the first operational area I to the second operational area II, the opening degree of the throttle valve 20 increases stepwise from a 2/3-open state toward a completely open state. At this time, according to the example shown in Fig. 9, the EGR rate decreases stepwise from about 70% to 40% or less, and the air-fuel ratio increases stepwise. That is, since the EGR rate goes beyond a range (Fig. 5) where a large amount of smoke is generated, there is no possibility of a large amount of smoke being generated when the engine undergoes a transition from the first operational area I to the second operational area II.

In the second operational area II, the conventionally adopted combustion is carried out. In the second operational area II, apart from a few exceptional cases, the throttle valve 20 is held in a completely open state, and the opening degree of the EGR control valve 31 is gradually reduced with increases in load requirement L. In the second operational area II, the EGR rate becomes lower as the load requirement L becomes higher, and the air-fuel ratio becomes smaller as the load requirement L becomes higher. However, the air-fuel ratio remains lean even if the load requirement L has become high. Further, in the second operational area II, the injection start timing θS is in the vicinity of the compressive top dead center TDC.

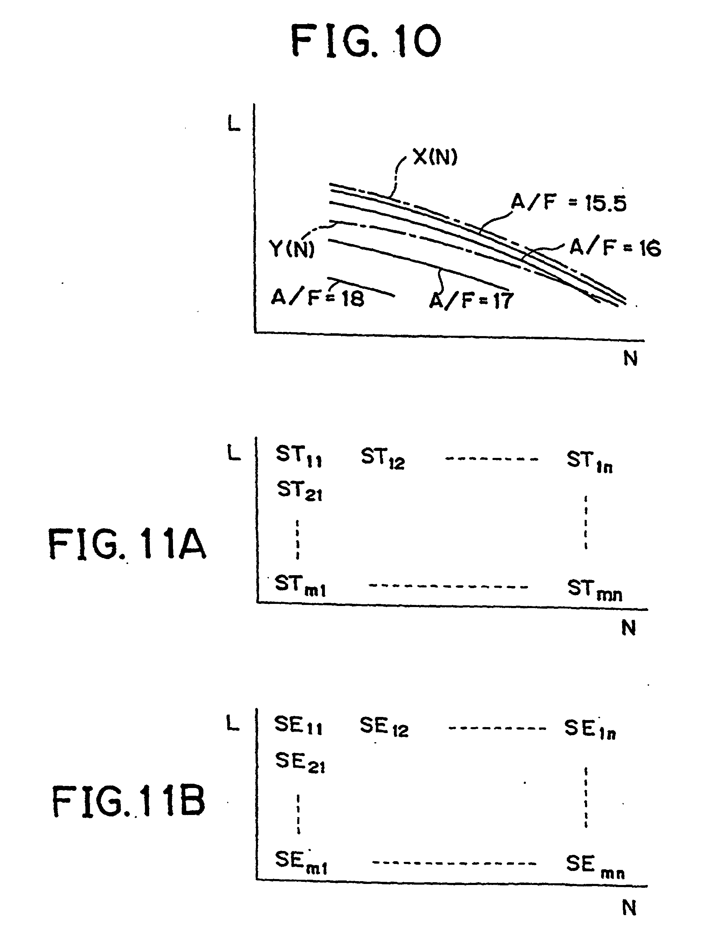

Fig. 10 shows a target air-fuel ratio A/F in the first operational area I. Referring to Fig. 10, curves indicated by A/F = 15.5, A/F = 16, A/F = 17 and A/F = 18 represent the cases where the air-fuel ratio is 15.5, 16, 17 and 18 respectively. The air-fuel ratios between the respective curves are determined by means of proportional distribution. As can be seen from Fig. 10, in the first operational area I, the air-fuel ratio is lean. As the load requirement L becomes lower, the air-fuel ratio A/F is shifted toward the lean side.

In other words, as the load requirement L becomes lower, the exothermic value by means of combustion decreases. Therefore, as the load requirement L becomes lower, the low-temperature combustion can be carried out more easily even if the EGR rate has been reduced. If the EGR rate is reduced, the air-fuel ratio becomes larger. Therefore, as shown in Fig. 10, as the load requirement L becomes lower, the air-fuel ratio A/F is made larger. The larger the air-fuel ratio A/F becomes, the more the fuel consumption is improved. Thus, in order to set the air-fuel ratio toward the lean side to the maximum possible extent, according to this embodiment, the air-fuel ratio A/F is made larger as the load requirement L becomes lower.

The target opening degree ST of the throttle valve 20, which is necessary for setting the air-fuel ratio to the target air-fuel ratio A/F shown in Fig. 10, is preliminarily stored in the form of a map in the ROM 42 as a function of load requirement L and engine speed N, as can be seen from Fig. 11A. The target opening degree SE of the EGR control valve 31, which is necessary for setting the air-fuel ratio to the target air-fuel ratio A/F shown in Fig. 10, is preliminarily stored in the form of a map in the ROM 42 as a function of load requirement L and engine speed N, as can be seen from Fig. 11B.

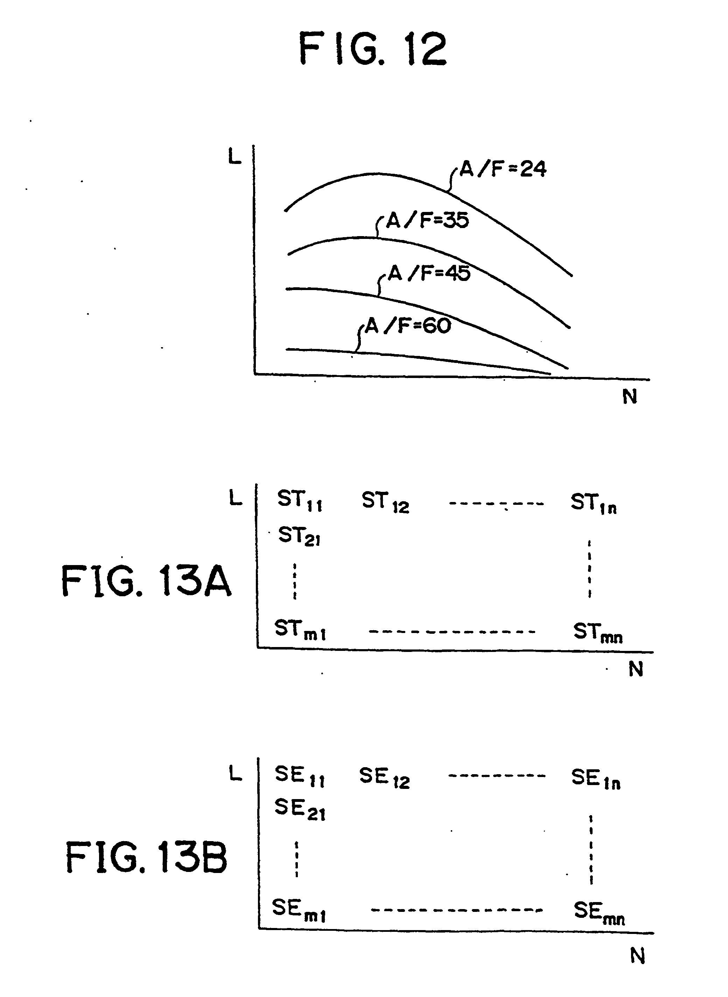

Fig. 12 shows a target air-fuel ratio A/F when the second combustion, namely, the conventionally adopted combustion is carried out. Referring to Fig. 12, curves indicated by A/F = 24, A/F = 35, A/F = 45 and A/F = 60 represent cases where the air-fuel ratio is 24, 35, 45 and 60 respectively. The target opening degree ST of the throttle valve 20, which is necessary for setting the air-fuel ratio to the target air-fuel ratio, is preliminarily stored in the form of a map in the ROM 42 as a function of load requirement L and engine speed N, as can be seen from Fig. 13A. The target opening degree SE of the EGR control valve 31, which is necessary for setting the air-fuel ratio to the target air-fuel ratio, is preliminarily stored in the form of a map in the ROM 42 as a function of load requirement L and engine speed N, as can be seen from Fig. 13B.

As shown in Fig. 9, if the engine undergoes a transition from the first operational area I to the second operational area II, the opening degree of the throttle valve 20 is increased stepwise. In this case, as described at the beginning, if the opening degree of the throttle valve 20 is switched from the target opening degree shown in Fig. 11A to the target opening degree shown in Fig. 13A, the air-fuel ratio in the combustion chamber 5 slowly changes from the target air-fuel ratio A/F shown in Fig. 10 to the target air-fuel ratio A/F shown in Fig. 12. During this process, there is caused a problem of inability to cause good combustion, and there is even a danger that smoke is generated.

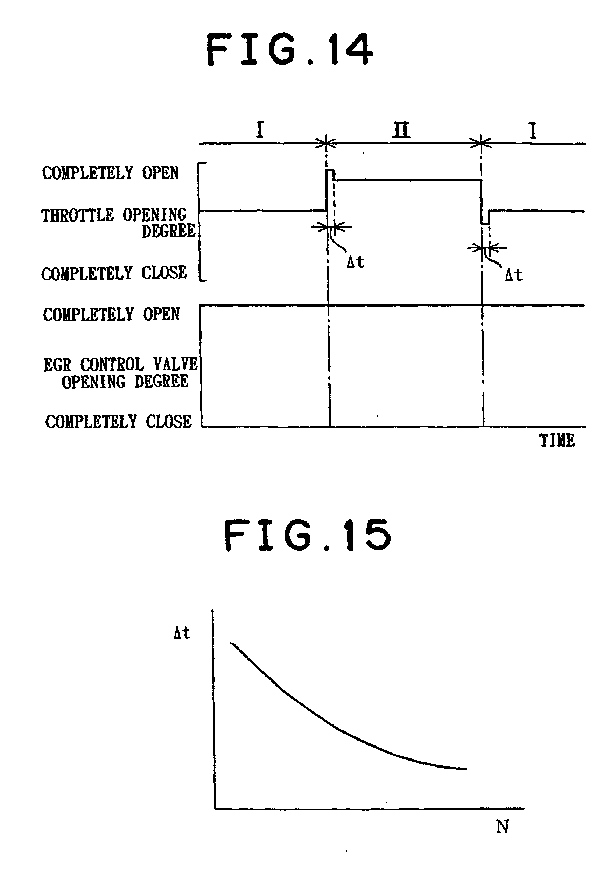

Therefore, according to the embodiment of the present invention, as can be seen from Fig. 14, when the engine undergoes a transition from the first operational area I to the second operational area II, the opening degree of the throttle valve 20 is temporarily made larger than the target opening degree ST shown in Fig. 13A for a predetermined length of time Δt. Thereafter, the opening degree of the throttle valve 20 is set to the target opening degree ST shown in Fig. 13A.

That is, upon a transition from the first operational area I to the second operational area II, the EGR gas in the EGR passage 29 contains only a small amount of air. Therefore, at the time, the air-fuel ratio in the combustion chamber 5 becomes smaller than the target air-fuel ratio shown in Fig. 12. However, at this time, if the opening degree of the throttle valve 20 is temporarily made larger, the amount of air supplied into the combustion chamber 5 increases, so that the air-fuel ratio immediately reaches the target air-fuel ratio A/F shown in Fig. 12. When the air-fuel ratio in the combustion chamber 5 becomes the target air-fuel ratio A/F, the amount of air contained in the EGR gas increases. Consequently, the air-fuel ratio is thereafter maintained at the target air-fuel ratio A/F.

Thus, the air-fuel ratio immediately becomes the target air-fuel ratio A/F by temporarily increasing the opening degree of the throttle valve 20. As a result, it is possible to achieve good combustion and prevent generation of smoke. This is because the air-fuel ratio skips over an area where a large amount of smoke is generated.

Furthermore, in the embodiment of the present invention, when the engine undergoes a transition from the second operational area II to the first operational area I, the opening degree of the throttle valve 20 is temporarily made smaller than the target opening degree ST shown in Fig. 11A for a predetermined length of time Δt. Thereafter, the opening degree of the throttle valve 20 is set to the target opening degree ST shown in Fig. 11A.

That is, upon a transition from the second operational area II to the first operational area I, the EGR gas in the EGR passage 29 contains a large amount of air. Therefore, at the time, the air-fuel ratio in the combustion chamber 5 becomes larger than the target air-fuel ratio shown in Fig. 10. However, at this time, if the opening degree of the throttle valve 20 is temporarily made smaller, the amount of air supplied into the combustion chamber 5 decreases, so that the air-fuel ratio immediately reaches the target air-fuel ratio A/F shown in Fig. 10. When the air-fuel ratio in the combustion chamber 5 becomes the target air-fuel ratio A/F, the amount of air contained in the EGR gas decreases. Consequently, the air-fuel ratio is thereafter maintained at the target air-fuel ratio A/F.

Thus, the air-fuel ratio immediately becomes the target air-fuel ratio A/F by temporarily reducing the opening degree of the throttle valve 20. As a result, it is possible to achieve good combustion and prevent generation of smoke. This is because the air-fuel ratio skips over an area where a large amount of smoke is generated.

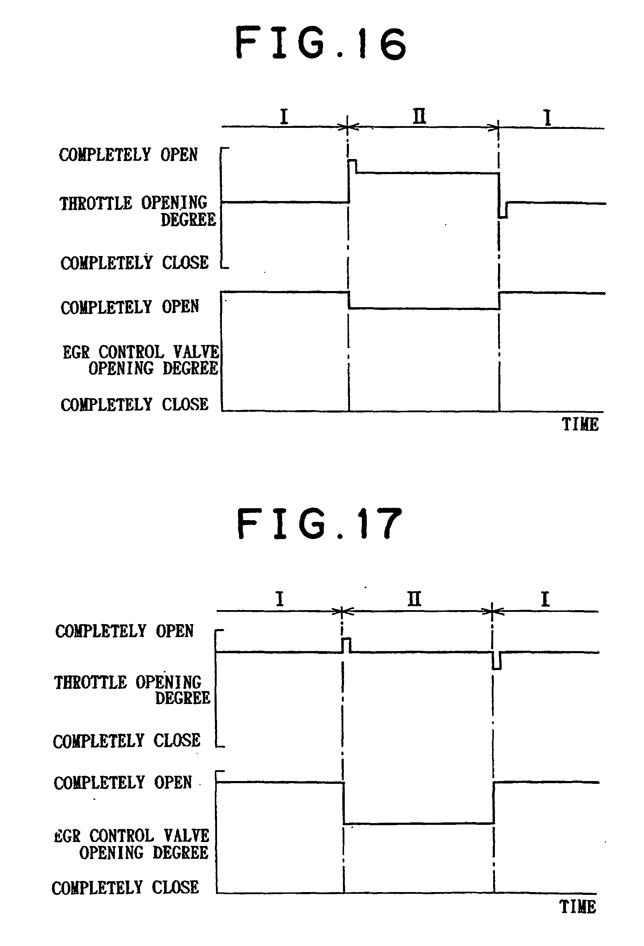

In this manner, the air-fuel ratio in the combustion chamber 5 reaches the target air-fuel ratio A/F preferably within one cycle by temporarily increasing or reducing the opening degree of the throttle valve 20. Even if this is difficult, the air-fuel ratio in the combustion chamber 5 reaches the target air-fuel ratio A/F within a few cycles. Accordingly, as shown in Fig. 15, the length of time Δt for temporarily increasing or reducing the opening degree of the throttle valve 20 is shortened as the engine speed N increases.

Figs. 16 and 17 show examples different from that shown in Fig. 14. In the example shown in Fig. 16, at the time of a transition from the first operational area I to the second operational area II, the EGR control valve 31 is opened stepwise. Conversely, at the time of a transition from the second operational area II to the first operational area I, the EGR control valve 31 is closed stepwise.

On the other hand, in the example shown in Fig. 17, the EGR control valve 31 performs a switching operation between the first operational area I and the second operational area II. In this case, at the time of a transition from the first operational area I to the second operational area II, the throttle valve 20 is temporarily adjusted to be opened by a certain amount. Conversely, at the time of a transition from the second operational area II to the first operational area I, the throttle valve 20 is temporarily adjusted to be closed by a certain amount.

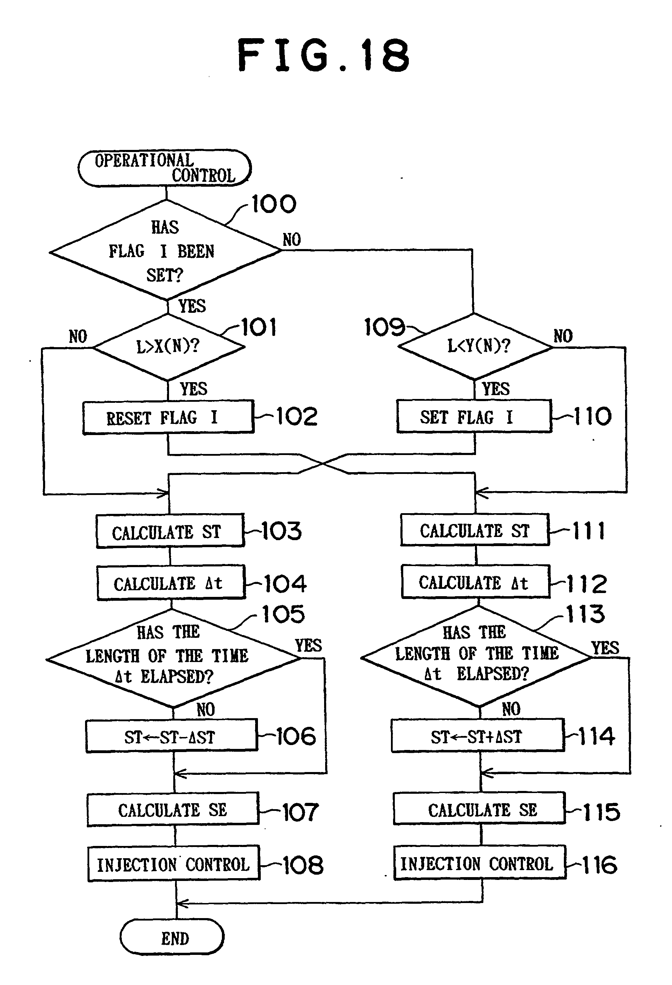

Fig. 18 shows an operational control routine suited to perform the control of the throttle valve 20 and the EGR control valve 31 as shown in Figs. 14, 16 and 17.

Referring to Fig. 18, first of all, it is determined in step 100 whether or not a flag I indicating that the engine is in the first operational area I has been set. If the flag I has been set, that is, if the engine is in the first operational area I, the process proceeds to step 101 where it is determined whether or not the load requirement L has become larger than the first border X1(N). If L ≤ X1(N), the process proceeds to step 103 where the low-temperature combustion is carried out.

That is, in step 103, the target opening degree ST of the throttle valve 20 is calculated from the map shown in Fig. 11A. Then in step 104, the length of time Δt is calculated from the relationship shown in Fig. 15. Then it is determined in step 105 whether or not the length of time Δt has elapsed after a transition from the second combustion to the first combustion. If the length of time Δt has not elapsed, the process proceeds to step 106 where the target opening degree of the throttle valve 20 is reduced by a constant value ΔST. That is, until the lapse of the length of time Δt, the opening degree of the throttle valve 20 is made smaller than the target opening degree ST shown in Fig. 11A.

Then in step 107, the target opening degree SE of the EGR control valve 31 is calculated from the map shown in Fig. 11B. The opening degree of the EGR control valve 31 is set to the thus-calculated target opening degree SE. Then in step 108, fuel injection is carried out such that the air-fuel ratio shown in Fig. 10 is achieved. At this time, the low-temperature combustion is carried out.

On the other hand, if it is determined in step 101 that L > X(N), the process proceeds to step 102 where the flag I is reset. The process then proceeds to step 111 where the second combustion is carried out.

That is, in step 111, the target opening degree ST of the throttle valve 20 is calculated from the map shown in Fig. 13A. Then in step 112, the length of time Δt is calculated from the relationship shown in Fig. 15. Then it is determined in step 113 whether or not the length of time Δt has elapsed after a transition from the first combustion to the second combustion. If the length of time Δt has not elapsed, the process proceeds to step 114 where the target opening degree ST of the throttle valve 20 is increased by a constant value ΔST. That is, until the lapse of the length of time Δt, the opening degree of the throttle valve 20 is made larger than the target opening degree ST shown in Fig. 13A.

Then in step 115, the target opening degree SE of the EGR control valve 31 is calculated from the map shown in Fig. 13B. The opening degree of the EGR control valve 31 is set to the thus-calculated target opening degree SE. Then in step 116, fuel injection is carried out such that the lean air-fuel ratio shown in Fig. 12 is achieved.

If the flag I has been reset, during the following processing cycle, the process proceeds from step 100 to step 109, where it is determined whether or not the load requirement L has become lower than the second border Y(N). If L ≥ Y(N), the process proceeds to step 111, where the second combustion is carried out under a lean air-fuel ratio.

On the other hand, if it is determined in step 109 that L < Y(N), the process proceeds to step 110 where the flag I is set. The process then proceeds to step 103, where the low-temperature combustion is carried out.

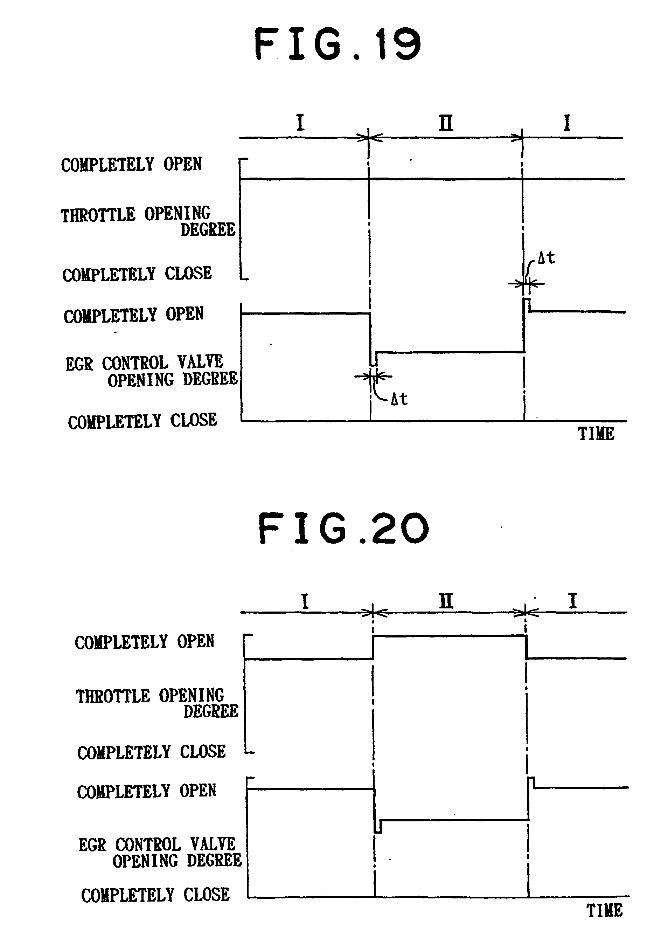

Fig. 19 shows another embodiment. In this embodiment, the EGR rate is reduced stepwise by closing the EGR control valve 31 at the time of a transition from the first operational area I to the second operational area II. Conversely, the EGR rate is increased by closing the EGR control valve 31 at the time of a transition from the second operational area II to the first operational area I.

In this embodiment, as shown in Fig. 19, when the engine undergoes a transition from the first operational area I to the second operational area II, the opening degree of the EGR control valve 31 is temporarily made smaller than the target opening degree SE for a predetermined length of time Δt. The opening degree of the EGR control valve 31 is thereafter set to the target opening degree SE.

That is, immediately after the engine has undergone a transition from the first operational state I to the second operational state II, the EGR gas in the EGR passage 29 contains only a small amount of air. Therefore, at this time, the air-fuel ratio in the fuel chamber 5 becomes smaller than the target air-fuel ratio A/F shown in Fig. 12. However, if the opening degree of the EGR control valve 31 is temporarily reduced, the amount of air supplied into the combustion chamber 5 increases. Thus, the air-fuel ratio immediately reaches the target air-fuel ratio A/F shown in Fig. 12. When the air-fuel ratio in the combustion chamber 5 becomes the target air-fuel ratio A/F, the amount of air in the EGR gas increases, so that the air-fuel ratio is thereafter maintained at the target air-fuel ratio A/F.

If the opening degree of the EGR control valve 31 is thus reduced temporarily, the air-fuel ratio reaches the target air-fuel ratio A/F immediately. Consequently, it is possible to achieve good combustion. Moreover, since the air-fuel ratio skips over the area where a large amount of smoke is generated, it is possible to prevent generation of smoke.

Furthermore, in this embodiment shown in Fig. 19, when the engine undergoes a transition from the second operational area II to the first operational area I, the opening degree of the EGR control valve 31 is temporarily made larger than the target opening degree SE for the predetermined length of time Δt. The opening degree of the EGR control valve 31 is thereafter set to the target opening degree SE.

That is, immediately after the engine has undergone a transition from the second operational state II to the first operational state I, the EGR gas in the EGR passage 29 contains a large amount of air. Therefore, at this time, the air-fuel ratio in the fuel chamber 5 becomes larger than the target air-fuel ratio A/F shown in Fig. 10. However, if the opening degree of the EGR control valve 31 is temporarily increased, the amount of air supplied into the combustion chamber 5 decreases. Thus, the air-fuel ratio immediately reaches the target air-fuel ratio A/F shown in Fig. 10. When the air-fuel ratio in the combustion chamber 5 becomes the target air-fuel ratio A/F, the amount of air in the EGR gas decreases, so that the air-fuel ratio is thereafter maintained at the target air-fuel ratio A/F.

If the opening degree of the EGR control valve 31 is thus increased temporarily, the air-fuel ratio reaches the target air-fuel ratio A/F immediately. Consequently, it is possible to achieve good combustion. Moreover, since the air-fuel ratio skips over the area where a large amount of smoke is generated, it is possible to prevent generation of smoke.

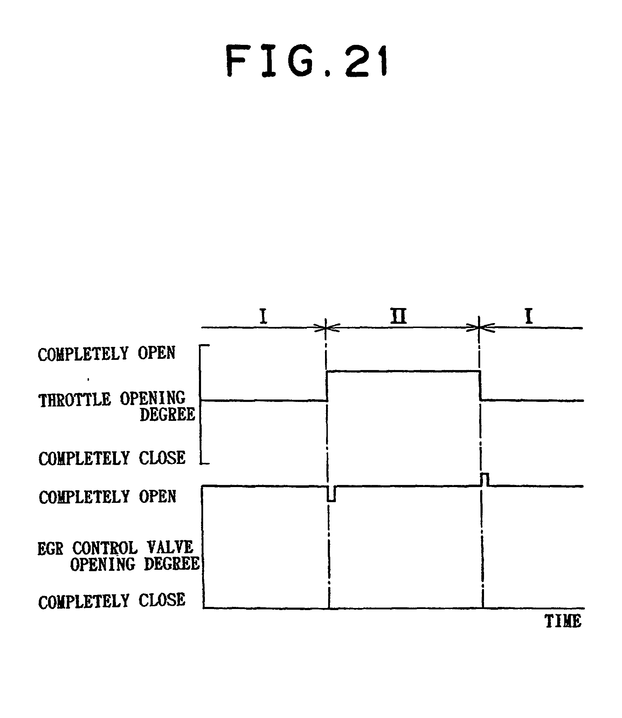

Figs. 20 and 21 show examples different from that shown in Fig. 19. In the example shown in Fig. 20, at the time of a transition from the first operational area I to the second operational area II, the throttle valve 20 is opened stepwise. Conversely, at the time of a transition from the second operational area II to the first operational area I, the throttle valve 20 is closed stepwise.

On the other hand, in the example shown in Fig. 21, the throttle valve 20 performs a switching operation between the first operational area I and the second operational area II. In this case, at the time of a transition from the first operational area I to the second operational area II, the EGR control valve 31 is temporarily adjusted to be closed by a certain amount. Conversely, at the time of a transition from the second operational area II to the first operational area I, the EGR control valve 31 is temporarily adjusted to be opened by a certain amount.

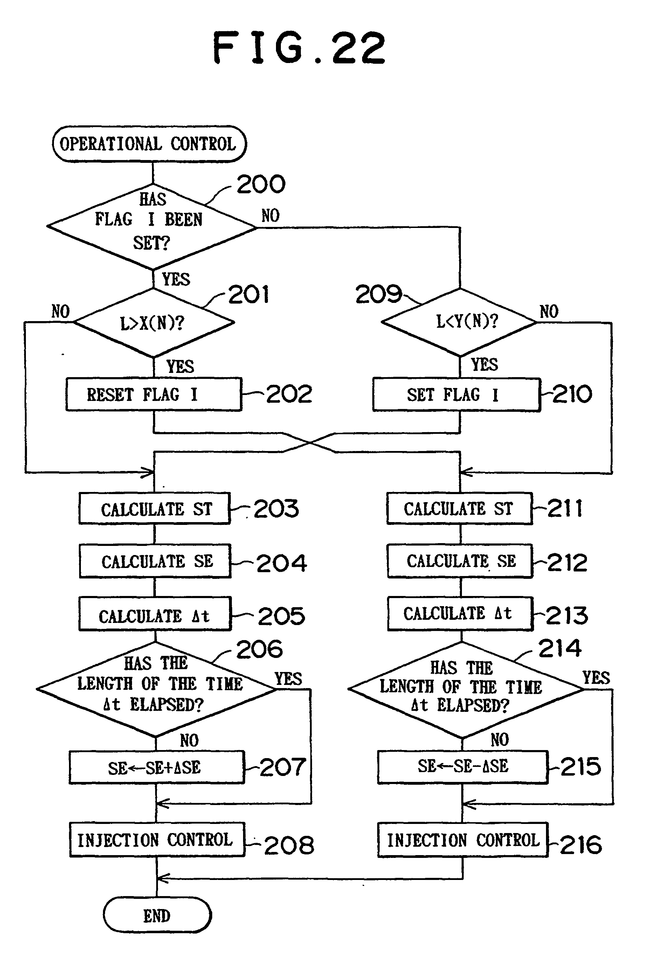

Fig. 22 shows an operational control routine suited to perform the control of the throttle valve 20 and the EGR control valve 31 as shown in Figs. 19, 20 and 21.

Referring to Fig. 22, first of all, it is determined in step 200 whether or not a flag I indicating that the engine is in the first operational area I has been set. If the flag I has been set, that is, if the engine is in the first operational area I, the process proceeds to step 201 where it is determined whether or not the load requirement L has become larger than the first border X1(N). If L ≤ X1(N), the process proceeds to step 203 where the low-temperature combustion is carried out.

That is, in step 203, the target opening degree ST of the throttle valve 20 is calculated. The opening degree of the throttle valve 20 is then set to the thus-calculated target opening degree ST. Then in step 204, the target opening degree SE of the EGR control valve 31 is calculated in step 204. Then in step 205, the length of time Δt is calculated from the relationship shown in Fig. 15. Then it is determined in step 206 whether or not the length of time Δt has elapsed after a transition from the second combustion to the first combustion. If the length of time Δt has not elapsed, the process proceeds to step 207, where the target opening degree SE of the EGR control valve 31 is increased by a constant value ΔSE. That is, until the lapse of the length of time Δt, the opening degree of the EGR control valve 31 is made larger than the target opening degree SE. Then in step 208, fuel injection is carried out such that the air-fuel ratio shown in Fig. 10 is achieved. At this time, the low-temperature combustion is carried out.

On the other hand, if it is determined in step 201 that L > X(N), the process proceeds to step 202, where the flag I is reset. The process then proceeds to step 211, where the second combustion is carried out.

Namely, in step 211, the target opening degree ST of the throttle valve 20 is calculated. The opening degree of the throttle valve 20 is set to the thus-calculated target opening degree ST. Then in step 212, the target opening degree SE of the EGR control valve 31 is calculated. Then in step 213, the length of time Δt is calculated from the relationship shown in Fig. 15. Then it is determined in step 214 whether or not the length of time Δt has elapsed after a transition from the first combustion to the second combustion. If the length of time Δt has not elapsed, the process proceeds to step 215, where the target opening degree SE of the EGR control valve 31 is reduced by the constant value ΔSE. That is, until the lapse of the length of time Δt, the opening degree of the EGR control valve 31 is made smaller than the target opening degree ST. Then in step 216, fuel injection is carried out such that the lean air-fuel ratio shown in Fig. 12 is achieved.

If the flag I has been reset, during the following processing cycle, the process proceeds from step 200 to step 209, where it is determined whether or not the load requirement L has become lower than the second border Y(N). If L ≥ Y(N), the process proceeds to step 211, where the second combustion is carried out under a lean air-fuel ratio.

On the other hand, if it is determined in step 209 that L < Y(N), the process proceeds to step 210 where the flag I is set. The process then proceeds to step 203, where the low-temperature combustion is carried out.

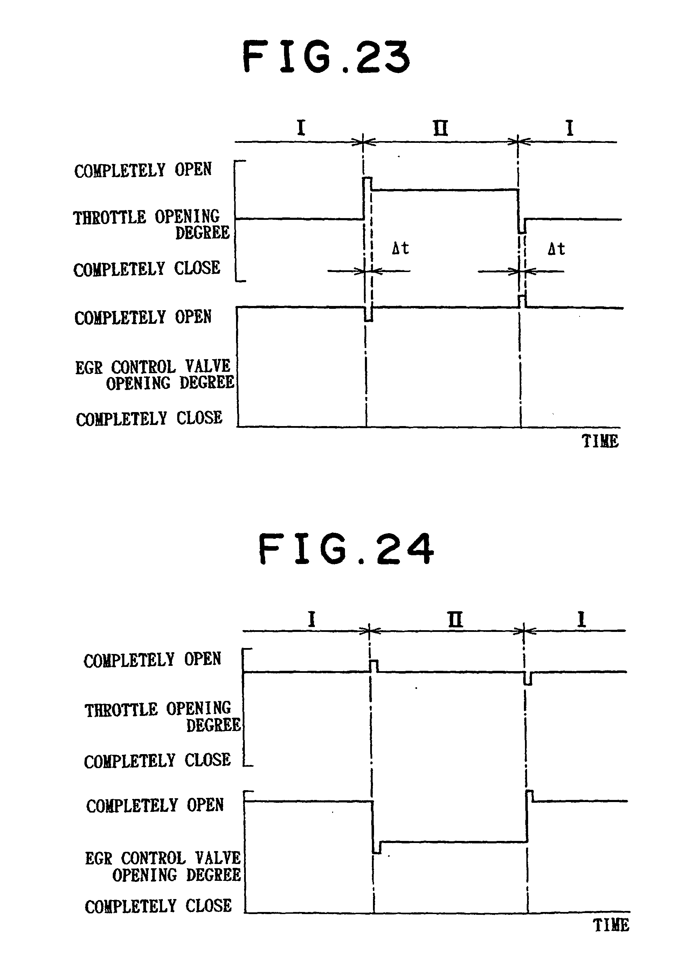

Figs. 23 to 25 show still further variations. In these variations, at the time of a transition from the first operational area I to the second operational area II, the opening degree of the throttle valve 20 is temporarily made larger than the target opening degree ST by a constant value, and the opening degree of the EGR control valve 31 is temporarily made smaller than the target opening degree SE by a constant value. Conversely, at the time of a transition from the second operational area II to the first operational area I, the opening degree of the throttle valve 20 is temporarily made smaller than the target opening degree ST by a constant value, and the opening degree of the EGR control valve 31 is temporarily made larger than the target opening degree SE by a constant value.

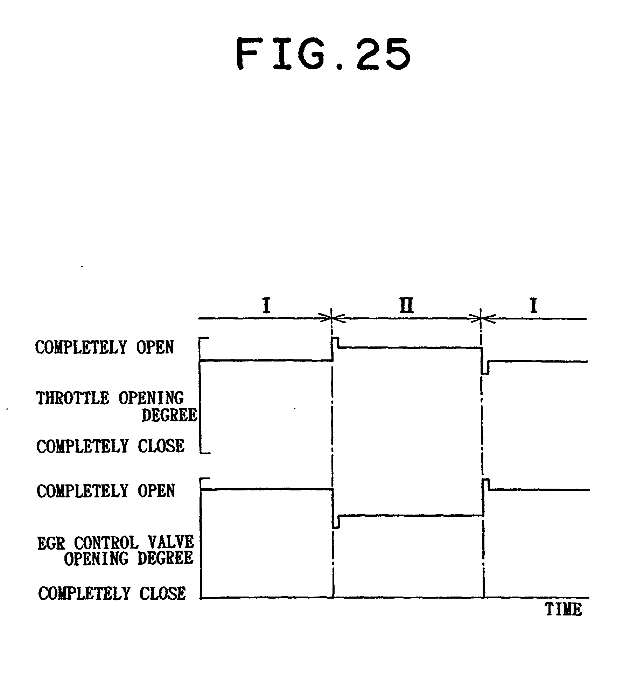

In the example shown in Fig. 23, the throttle valve 20 performs a switching operation between the first operational area I and the second operational area II. In the example shown in Fig. 24, the EGR control valve 31 performs a switching operation between the first operational area I and the second operational area II. In the example shown in Fig. 25, both the throttle valve 20 and the EGR control valve 31 perform a switching operation between the first operational area I and the second operational area II.

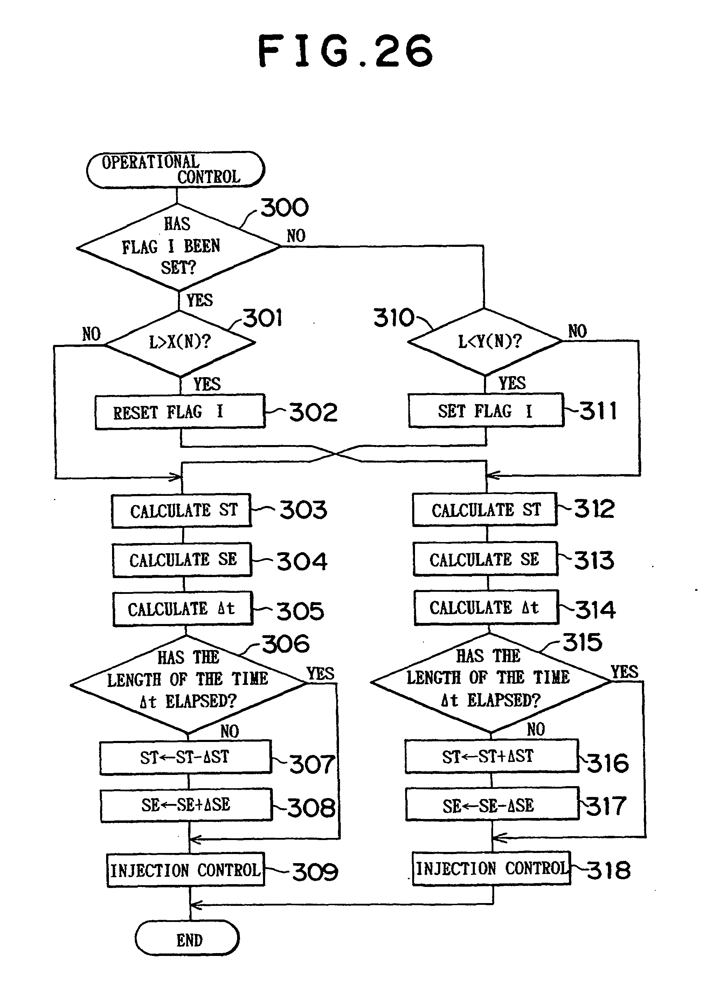

Fig. 26 shows an operational control routine suited to perform the control of the throttle valve 20 and the EGR control valve 31 as shown in Figs. 23, 24 and 25.

Referring to Fig. 26, first of all, it is determined in step 300 whether or not a flag I indicating that the engine is in the first operational area I has been set. If the flag I has been set, that is, if the engine is in the first operational area I, the process proceeds to step 301 where it is determined whether or not the load requirement L has become larger than the first border X1(N). If L X1(N), the process proceeds to step 303 where the low-temperature combustion is carried out.

That is, in step 303, the target opening degree ST of the throttle valve 20 is calculated. Then in step 304, the target opening degree SE of the EGR control valve 31 is calculated. Then in step 305, the length of time Δt is calculated from the relationship shown in Fig. 15. Then it is determined in step 306 whether or not the length of time Δt has elapsed after a transition from the second combustion to the first combustion. If the length of time Δt has not elapsed, the process proceeds to step 307 where the target opening degree ST of the throttle valve 20 is reduced by a constant value ΔST. That is, until the lapse of the length of time Δt, the opening degree of the throttle valve 20 is made smaller than the target opening degree ST. Then in step 308, the target opening degree SE of the EGR control valve 31 is increased by a constant value ΔSE. That is, until the lapse of the length of time Δt, the opening degree of the EGR control valve 31 is made larger than the target opening degree SE. Then in step 309, fuel injection is carried out such that the air-fuel ratio shown in Fig. 10 is achieved. At this time, the low-temperature combustion is carried out.

On the other hand, if it is determined in step 301 that L > X(N), the process proceeds to step 302, where the flag I is reset. The process then proceeds to step 312, where the second combustion is carried out.

That is, in step 312, the target opening degree ST of the throttle valve 20 is calculated. Then in step the target opening degree SE of the EGR control valve 31 is calculated. Then in step 314, the length of time Δt is calculated from the relationship shown in Fig. 15. Then it is determined in step 315 whether or not the length of time Δt has elapsed after a transition from the first combustion to the second combustion. If the length of time Δt has not elapsed, the process proceeds to step 316 where the target opening degree ST of the throttle valve 20 is increased by a constant value ΔST. That is, until the lapse of the length of time Δt, the opening degree of the throttle valve 20 is made larger than the target opening degree ST. Then in step 317, the target opening degree SE of the EGR control valve 31 is reduced by the constant value ΔSE. That is, until the lapse of the length of time Δt, the opening degree of the EGR control valve 31 is made smaller than the target opening degree SE. Then in step 318, fuel injection is carried out such that the lean air-fuel ratio shown in Fig. 12 is achieved.

If the flag I has been reset, during the following processing cycle, the process proceeds from step 300 to step 310, where it is determined whether or not the load requirement L has become lower than the second border Y(N). If L ≥ Y(N), the process proceeds to step 312, where the second combustion is carried out under a lean air-fuel ratio.

On the other hand, if it is determined in step 310 that L < Y(N), the process proceeds to step 311 where the flag I is set. The process then proceeds to step 303, where the low-temperature combustion is carried out.

In the aforementioned embodiment, the throttle valve 20 or the EGR control valve 31 is temporarily controlled to be opened or closed so as to adjust the air-fuel ratio in switching between the first combustion and the second combustion. Furthermore, since the amount of intake air or EGR gas actually changes with a delay, the air-fuel ratio does not increase immediately. Instead, the air-fuel ratio increases gradually. In switching from the first combustion to the second combustion, the air-fuel ratio in a cylinder to be subjected to combustion first does not increase sufficiently, but the air-fuel ratios in cylinders to be subjected to combustion thereafter increase sufficiently. Therefore, in the case where the first combustion has been switched to the second combustion, the air-fuel ratio in the cylinder to be subjected to combustion first is especially important.

In this case, if the air-fuel ratio in the cylinder to be subjected to combustion first is large from the outset, the air-fuel ratio does not change significantly at the time of a transition to the second combustion. Therefore, if the switching operation from the first combustion to the second combustion is carried out from a cylinder where the air-fuel ratio is large from the outset, the air-fuel ratio in the cylinder increases to almost reach a value suited for the second combustion. Thus, it is possible to prevent generation of smoke at the time of the switching operation.

The same phenomenon occurs in switching from the second combustion to the first combustion. That is, in switching from the second combustion to the first combustion, the air-fuel ratio in a cylinder to be subjected to combustion first does not decrease sufficiently, but the air-fuel ratios in cylinders to be subjected to combustion thereafter decrease sufficiently. Therefore, in the case where the second combustion has been switched to the first combustion, the air-fuel ratio in the cylinder to be subjected to combustion first is especially important.

In this case, if the air-fuel ratio in the cylinder to be subjected to combustion first is small from the outset, the air-fuel ratio does not change significantly at the time of a transition to the second combustion. Therefore, if the switching operation from the second combustion to the first combustion is carried out from a cylinder where the air-fuel ratio is small from the outset, the air-fuel ratio in the cylinder decreases to almost reach a value suited for the new combustion. Thus, it is possible to prevent generation of smoke at the time of the switching operation.

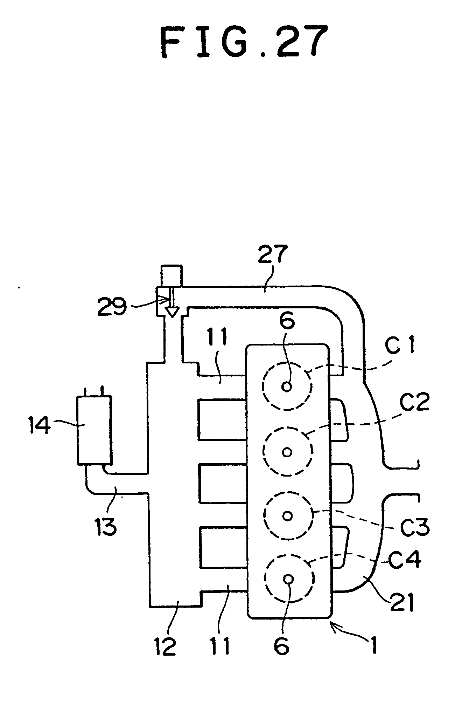

Hence, the switching control of combustion which takes air-fuel ratios in the respective cylinders into account will now be described. In this embodiment, as shown in Fig. 27, the internal combustion engine has four cylinders, that is, a first cylinder C1, a second cylinder C2, a third cylinder C3 and a fourth cylinder C4. In this embodiment, fuel is injected into these cylinders in the sequence of 1, 3, 4 and 2. The EGR passage 27 is connected to the end portion of the surge tank 12 on the side of the first cylinder C1. In this case, for structural reasons, the largest amount of EGR gas is supplied to the first cylinder C1, and the smallest amount of EGR gas is supplied to the fourth cylinder C4. Therefore, in this case, the EGR rate and the air-fuel ratio are the highest and the smallest respectively in the combustion chamber of the first cylinder C1. Conversely, the EGR rate and the air-fuel ratio are the lowest and the largest in the combustion chamber of the fourth cylinder C4.

Therefore, in the case of the construction shown in Fig. 27, if the switching operation from the first combustion to the second combustion is carried out first in the fourth cylinder C4, changes in EGR rate and air-fuel are at minimum levels. If the switching operation from the second combustion to the first combustion is carried out first in the cylinder C1, changes in EGR rate and air-fuel ratio are at minimum levels.

That is, in switching from the first combustion to the second combustion, it is preferable that the switching operation be carried out first in the fourth cylinder C4. Thereafter, in accordance with the sequence of injection, one after another cylinder is subjected to the operation of switching from the first combustion to the second combustion. On the other hand, in switching from the second combustion to the first combustion, it is preferable that the switching operation be performed first in the first cylinder C1. Thereafter, in accordance with the sequence of injection, one after another cylinder is subjected to the operation of switching from the second combustion to the first combustion.

In an internal combustion engine of a certain construction, the EGR passage 27 is connected to the intake duct 13 upstream of the surge tank 12 so as to distribute EGR gas into the respective cylinders as homogeneously as possible. In this case, it is impossible to judge from the construction which one of the cylinders has a large air-fuel ratio and which one of the cylinders has a small air-fuel ratio. Therefore, the air-fuel ratios in the respective cylinders may be estimated from differences in engine speed among the respective cylinders at the time of combustion.

That is, during the first combustion, the combustion becomes active and the engine speed increases with increases in air-fuel ratio. Thus, during the first combustion, engine speeds in the respective cylinders are calculated based on output signals from the crank angle sensor 52. On the basis of the thus-calculated engine speeds, it is possible to determine a cylinder with the highest speed, namely, a cylinder with the largest air-fuel ratio. This cylinder is first subjected to the operation of switching from the first combustion to the second combustion.

On the other hand, unlike the first combustion, the second combustion is carried out with an excessive amount of air. Therefore, the output torque and the engine speed increase with decreases in air-fuel ratio.

Thus, during the second combustion, engine speeds in the respective cylinders are calculated based on output signals from the crank angle sensor 52. On the basis of the thus-calculated engine speeds, it is possible to determine a cylinder with the highest speed, namely, a cylinder with the smallest air-fuel ratio. This cylinder is first subjected to the operation of switching from the second combustion to the first combustion. Accordingly, the air-fuel ratio can approach the target air-fuel ratio A/F at an earlier stage.

While the present invention has been described with reference to what are presently considered to be preferred embodiments thereof, it is to be understood that the present invention is not limited to the disclosed embodiments or construction.

First combustion and second combustion are selectively carried out. During the first combustion, a combustion chamber (5) contains EGR gas of an amount larger than that corresponding to a peak generation amount of soot, and soot is hardly generated. During the second combustion, the combustion chamber (5) contains EGR gas of an amount smaller than that corresponding to the peak generation amount of soot. In switching from the first combustion to the second combustion, the opening degree of the throttle valve (20) is temporarily made larger than a target opening degree, and thereafter returned to the target opening degree.

## Claims

1. An internal combustion engine comprising
a throttle valve (20) controlling an amount of air supplied into a combustion chamber (5) of said engine,
an exhaust gas recirculation control valve (31) controlling an amount of exhaust gas recirculated into said combustion chamber (5) and
an electronic control unit (40) controlling said throttle valve (20) and said exhaust gas recirculation control valve (31) such that by changing an opening degree of at least one of the throttle valve (20) and the exhaust gas recirculation control valve (31) to a first target value corresponding to a first combustion state in which said combustion chamber (5) contains exhaust recirculation gas of an amount larger than that corresponding to a peak generation amount of soot and to a second target value corresponding to a second combustion state in which said combustion chamber (5) contains exhaust recirculation gas of an amount smaller than that corresponding to the peak generation amount of soot, wherein the first combustion state and the second combustion state are selectively switched,
**characterized in that**
upon switching from the first to the second combustion state the electronic control unit (40) temporarily shifts the actual opening degree of at least one of said throttle valve (20) and said exhaust gas recirculation control valve (31) with respect to the respective target value in such a direction as to increase an air-fuel ratio in the combustion chamber (5), and thereafter sets the actual opening degree to the target value.

2. The internal combustion engine according to claim 1, **characterized in that** upon switching from the first combustion state to the second combustion state, the opening degree of the throttle valve (20) is temporarily made larger than its target value.

3. The internal combustion engine according to claim 1, **characterized in that** upon switching from the first combustion state to the second combustion state, the opening degree of the exhaust gas recirculation control valve (31) is temporarily made smaller than its target value

4. The internal combustion engine according to claim 1, **characterized in:**
**that** the opening degree of at least one of the throttle valve (20) and the exhaust gas recirculation control valve (31) is temporarily shifted with respect to the respective target values in such a direction as to increase an air-fuel ratio in the combustion chamber (5) for a predetermined length of time; and
**that** the length of time is reduced with increases in engine speed.

5. An internal combustion engine according to the preamble of claim 1, **characterized in that** upon switching from the second combustion state to the first combustion state, the electronic control unit (40) temporarily shifts the actual opening degree of at least one of said throttle valve (20) and said exhaust gas recirculation control valve (31) with respect to the respective target value in such a direction as to reduce an air-fuel ratio in the combustion chamber (5), and thereafter set to the target value.

6. The internal combustion engine according to claim 5, **characterized in that** upon switching from the second combustion state to the first combustion state, the opening degree of the throttle valve (20) is temporarily made smaller than its target value.

7. The internal combustion engine according to claim 5, **characterized in that** upon switching from the second combustion state to the first combustion state, the opening degree of the exhaust gas recirculation control valve (31) is temporarily made larger than its target value.

8. The internal combustion engine according to claim 5, **characterized in:**
**that** the opening degree of at least one of the throttle valve (20) and the exhaust gas recirculation control valve (31) is temporarily shifted with respect to the respective target value in such a direction as to reduce an air-fuel ratio in the combustion chamber for a predetermined length of time; and
**that** the length of time is reduced with increases in engine speed.

9. The internal combustion engine according to claim 1 or 5, **characterized in:**
**that** an operational area of the engine is divided into a first operational area on a low-load side and a second operational area of a high-load side;
**that** the first combustion state is carried out in the first operational area; and
**that** the second combustion state is carried out in the second operational area.

10. The internal combustion engine according to claim 1 or 5, **characterized in that** a switching operation between the first combustion state and the second combustion state is sequentially performed from a cylinder with a minimum change amount of air-fuel ratio.

11. The internal combustion engine according to claim 1 or 10, **characterized in that** a switching operation from the first combustion state to the second combustion state is performed first in a cylinder whose combustion chamber has the largest air-fuel ratio.

12. The internal combustion engine according to claim 1 or 10, **characterized in:**
**that** the internal combustion engine is provided with detection means (52) for detecting engine speeds in respective cylinders during combustion; and
**that** a switching operation from the first combustion state to the second combustion state is performed first in a cylinder which has the highest engine speed during combustion.

13. The internal combustion engine according to claim 5 or 10, **characterized in that** a switching operation from the second combustion state to the first combustion state is performed first in a cylinder whose combustion chamber has the smallest air-fuel ratio.

14. The internal combustion engine according to claim 5 or 10, **characterized in:**
**that** the internal combustion engine is provided with detection means for detecting engine speeds in respective cylinders during combustion; and
**that** a switching operation from the second combustion state to the first combustion state is performed first in a cylinder which has the highest engine speed during combustion.

## Patentansprüche

1. Verbrennungsmotor mit
einem Drosselventil (20), das eine Menge an Luft steuert, die zu einer Verbrennungskammer (5) des Motors geliefert wird,
einem Abgasrezirkulationssteuerventil (31), das eine Menge an Abgas steuert, die in die Verbrennungskammer (5) rezirkuliert, und
einer elektronischen Steuereinheit (40), die das Drosselventil (20) und das Abgasrezirkulationssteuerventil (31) derart steuert, ein Öffnungsgrad von zumindest entweder dem Drosselventil (20) oder dem Abgasrezirkulationssteuerventil (31) auf einen ersten Zielwert geändert wird, der einem Verbrennungszustand entspricht, bei dem die Verbrennungskammer (5) Abgasrezirkulationsgas in einer Menge enthält, die größer als jene ist, die einer Spitzenerzeugungsmenge an Ruß entspricht, und auf einen zweiten Zielwert geändert wird, der einem zweiten Verbrennungszustand entspricht, bei dem die Verbrennungskammer (5) Abgasrezirkulationsabgas in einer Menge enthält, die geringer als jene ist, die der Spitzenerzeugungsmenge an Ruß entspricht, wobei der erste Verbrennungszustand und der zweite Verbrennungszustand wahlweise geschaltet werden,
**dadurch gekennzeichnet, dass**
beim Schalten von dem ersten in den zweiten Verbrennungszustand die elektronische Steuereinheit (40) vorübergehend den tatsächlichen Öffnungsgrad von zumindest entweder dem Drosselventil (20) oder dem Abgasrezirkulationssteuerventil (31) in Bezug auf den jeweiligen Zielwert in einer derartigen Richtung versetzt, dass ein Luft-Kraftstoff-Verhältnis in der Verbrennungskammer (5) zunimmt, und danach den tatsächlichen Öffnungsgrad auf den Zielwert setzt.

2. Verbrennungsmotor gemäß Anspruch 1,
**dadurch gekennzeichnet, dass**
beim Schalten von dem ersten Verbrennungszustand in den zweiten Verbrennungszustand der Öffnungsgrad des Drosselventils (20) vorübergehend dazu gebracht wird, dass er größer als sein Zielwert ist.

3. Verbrennungsmotor gemäß Anspruch 1,
**dadurch gekennzeichnet, dass**
beim Schalten von dem ersten Verbrennungszustand in den zweiten Verbrennungszustand der Öffnungsgrad des Abgasrezirkulationssteuerventils (31) vorübergehend dazu gebracht wird, dass er kleiner als sein Zielwert ist.

4. Verbrennungsmotor gemäß Anspruch 1,
**dadurch gekennzeichnet, dass**
der Öffnungsgrad von zumindest entweder dem Drosselventil (20) oder dem Abgasrezirkulationssteuerventil (31) vorübergehend in Bezug auf die jeweiligen Zielwerte in einer derartigen Richtung versetzt wird, dass ein Luft-Kraftstoffverhältnis in der Verbrennungskammer (5) eine vorbestimmte Zeitspanne lang zunimmt; und
die Länge der Zeitspanne mit der Zunahme der Motordrehzahl kleiner ist.

5. Verbrennungsmotor gemäß dem Oberbegriff von Anspruch 1,
**dadurch gekennzeichnet, dass**
beim Schalten von dem zweiten Verbrennungszustand in den ersten Verbrennungszustand die elektronische Steuereinheit (40) vorübergehend den tatsächlichen Öffnungsgrad von zumindest entweder dem Drosselventil (20) oder dem Abgasrezirkulationssteuerventil (31) in Bezug auf den jeweiligen Zielwert in einer derartigen Richtung versetzt, dass ein Luft-Kraftstoff-Verhältnis in der Verbrennungskammer (5) verringert wird, und anschließend auf den Zielwert gesetzt wird.

6. Verbrennungsmotor gemäß Anspruch 5,
**dadurch gekennzeichnet, dass**
beim Schalten von dem zweiten Verbrennungszustand in den ersten Verbrennungszustand der Öffnungsgrad von dem Drosselventil (20) vorübergehend dazu gebracht wird, dass er kleiner als sein Zielwert ist.

7. Verbrennungsmotor gemäß Anspruch 5,
**dadurch gekennzeichnet, dass**
beim Schalten von dem zweiten Verbrennungszustand in den ersten Verbrennungszustand der Öffnungsgrad von dem Abgasrezirkulationssteuerventil (31) vorübergehend dazu gebracht wird, dass er größer als sein Zielwert ist.

8. Verbrennungsmotor gemäß Anspruch 5,
**dadurch gekennzeichnet, dass**
der Öffnungsgrad von zumindest entweder dem Drosselventil (20) oder dem Abgasrezirkulationssteuerventil (31) vorübergehend in Bezug auf den jeweiligen Zielwert in einer derartigen Richtung versetzt wird, dass ein Luft-Kraftstoffverhältnis in der Verbrennungskammer (5) eine vorbestimmte Zeitspanne lang verringert wird; und
die Länge der Zeitspanne mit der Zunahme der Motordrehzahl kleiner ist.

9. Verbrennungsmotor gemäß Anspruch 1 oder 5,
**dadurch gekennzeichnet, dass**
ein Betriebsbereich des Motors in einen ersten Betriebsbereich an einer Niedriglastseite und einen zweiten Betriebsbereich an einer Hochlastseite geteilt ist;
der erste Verbrennungszustand in dem ersten Betriebsbereich ausgeführt wird; und
der zweite Verbrennungszustand in dem zweiten Betriebsbereich ausgeführt wird.

10. Verbrennungsmotor gemäß Anspruch 1 oder 5,
**dadurch gekennzeichnet, dass**
ein Schaltvorgang zwischen dem ersten Verbrennungszustand und dem zweiten Verbrennungszustand aufeinanderfolgend von einem Zylinder mit einem minimalen Änderungsbetrag des Luft-Kraftstoff-Verhältnisses ausgeführt wird.

11. Verbrennungsmotor gemäß Anspruch 1 oder 10,
**dadurch gekennzeichnet, dass**
ein Schaltvorgang von dem ersten Verbrennungszustand in den zweiten Verbrennungszustand zunächst bei einem Zylinder ausgeführt wird, dessen Verbrennungskammer das größte Luft-Kraftstoff-Verhältnis hat.

12. Verbrennungsmotor gemäß Anspruch 1 oder 10,
**dadurch gekennzeichnet, dass**
der Verbrennungsmotor mit einer Erfassungseinrichtung (52) versehen ist, um die Motordrehzahl bei den jeweiligen Zylindern während der Verbrennung zu erfassen; und
ein Schaltvorgang von dem ersten Verbrennungszustand in den zweiten Verbrennungszustand zunächst bei einem Zylinder ausgeführt wird, der die höchste Motordrehzahl während der Verbrennung hat.

13. Verbrennungsmotor gemäß Anspruch 5 oder 10,
**dadurch gekennzeichnet, dass**
ein Schaltvorgang von dem zweiten Verbrennungszustand in den ersten Verbrennungszustand zunächst bei einem Zylinder ausgeführt wird, dessen Verbrennungskammer das kleinste Luft-Kraftstoff-Verhältnis hat.

14. Verbrennungsmotor gemäß Anspruch 5 oder 10,
**dadurch gekennzeichnet, dass**
der Verbrennungsmotor mit einer Erfassungseinrichtung (52) versehen ist, um die Motordrehzahl bei den jeweiligen Zylindern während der Verbrennung zu erfassen; und
ein Schaltvorgang von dem zweiten Verbrennungszustand in den ersten Verbrennungszustand zunächst bei einem Zylinder ausgeführt wird, der die höchste Motordrehzahl während der Verbrennung hat.

## Revendications

1. Moteur à combustion interne comprenant
un papillon des gaz (20) commandant une quantité d'air alimenté dans une chambre de combustion (5) dudit moteur,
une soupape de commande de recirculation de gaz d'échappement (31) commandant une quantité de gaz d'échappement recirculée dans ladite chambre de combustion (5) et
une unité de commande électronique (40) commandant ledit papillon des gaz (20) et ladite soupape de commande de recirculation des gaz d'échappement (31) telle qu'en changeant un degré d'ouverture d'au moins un des papillons des gaz (20) et la soupape de commande de recirculation des gaz d'échappement (31) vers une première valeur cible correspondant à un premier état de combustion dans lequel ladite chambre de combustion (5) contient les gaz de recirculation d'échappement d'une quantité plus grande que celle correspondant à une quantité de génération de pic de suie et à une deuxième valeur cible correspondant à un deuxième état de combustion dans lequel ladite chambre de combustion (5) contient les gaz de recirculation d'échappement d'une quantité plus petite que celle correspondant à une quantité de génération de pic de suie, dans lequel le premier état de combustion et le deuxième état de combustion sont sélectivement commutées,
**caractérisé en ce que**
lors de la commutation depuis le premier vers le deuxième état de combustion l'unité de commande électronique (40) déplace de façon temporaire le degré effectif d'ouverture d'au moins un desdits papillons des gaz (20) et de ladite soupape de commande de recirculation des gaz d'échappement (31) en fonction de la valeur respective d'une direction telle que l'on augmente un rapport air/carburant dans la chambre de combustion (5), et ensuite règle le degré d'ouverture effectif vers la valeur cible.

2. Moteur à combustion interne selon la revendication 1, **caractérisé en ce que** lors de la commutation depuis le premier état de combustion vers le deuxième état de combustion, le degré d'ouverture du papillon des gaz (20) est élargi de façon temporaire d'une valeur plus grande que sa valeur cible.

3. Moteur à combustion interne selon la revendication 1, **caractérisé en ce que** lors de la commutation depuis le premier état de combustion vers le deuxième état de combustion, le degré d'ouverture de la soupape de commande de recirculation (31) est élargie de façon temporaire d'une valeur plus petite que sa valeur cible.

4. Moteur à combustion interne selon la revendication 1, **caractérisé en :**
**ce que** le degré d'ouverture d'au moins un des papillons de gaz (20) et la soupape de commande de recirculation de gaz d'échappement (31) est décalée de façon temporaire en fonction des valeurs cibles respectives dans une direction telle de façon à augmenter un rapport air/carburant dans la chambre de combustion (5) pendant une longueur de temps prédéterminée ; et
**en ce que** l'on réduit la longueur de temps avec des augmentations de la vitesse du moteur.

5. Moteur à combustion interne selon la revendication 1, **caractérisé en ce que** lors de la commutation depuis le deuxième état de combustion vers le premier état de combustion, l'unité électronique de commande (40) décale de façon temporaire le degré d'ouverture effectif d'au moins un desdits papillons de gaz (20) et de ladite soupape de commande de recirculation de gaz d'échappement (31) en fonction de la valeur cible respective dans une direction telle de façon à réduire le rapport air/carburant dans la chambre de combustion (5), et ensuite régler la valeur cible.

6. Moteur à combustion interne selon la revendication 5, **caractérisé en ce que** lors de la commutation depuis le deuxième état de combustion vers le premier état de combustion, le degré d'ouverture du papillon des gaz (20) est de façon temporaire rendu plus petit que sa valeur cible.

7. Moteur à combustion interne selon la revendication 5, **caractérisé en ce que** lors de la commutation depuis le deuxième état de combustion vers le premier état de combustion, le degré d'ouverture de la soupape de commande de recirculation des gaz d'échappement (31) est rendu de façon temporaire plus grande que sa valeur cible.

8. Moteur à combustion interne selon la revendication 5, **caractérisé en :**
**ce que** le degré d'ouverture d'au moins un des papillons de gaz (20) et de la soupape de commande de recirculation des gaz d'échappement (31) est décalée de façon temporaire en fonction de la valeur cible respective dans une direction telle de façon à réduire un rapport air/carburant dans la chambre de combustion pendant une période de temps prédéterminée ; et
que l'on réduit la longueur de temps avec des augmentations de la vitesse du moteur.

9. Moteur à combustion interne selon la revendication 1 ou 5, **caractérisé en :**
**ce qu'**une plage de fonctionnement du moteur est divisée en une première plage de fonctionnement sur un côté de faible charge et une deuxième plage de fonctionnement d'un côté de charge élevée ;
ce qu'on réalise le premier état de combustion dans la première plage de fonctionnement ; et qu'on réalise le deuxième état de combustion dans la deuxième plage de fonctionnement.

10. Moteur à combustion interne selon la revendication 1 ou 5, **caractérisé en ce qu'**on réalise une opération de commutation entre le premier état de combustion et le deuxième état de combustion de façon séquentielle depuis un cylindre avec une quantité minimum de changement du rapport air/carburant.

11. Moteur à combustion interne selon la revendication 1 ou 10, **caractérisé en ce qu'**on réalise une opération de commutation depuis le premier état de combustion vers le deuxième état de combustion d'abord dans un cylindre dont la chambre de combustion a le rapport air/carburant le plus grand.

12. Moteur à combustion interne selon la revendication 1 ou 10, **caractérisé en :**
**ce que** le moteur à combustion interne est muni d'un moyen de détection (52) pour détecter les vitesses du moteur dans les cylindres respectifs pendant la combustion ; et
qu'on réalise une opération de commutation depuis le premier état de combustion vers le deuxième état de combustion d'abord dans un cylindre qui a la vitesse moteur la plus élevée pendant la combustion.

13. Moteur à combustion interne selon la revendication 5 ou 10, **caractérisé en ce qu'**on réalise une opération de commutation depuis le deuxième état de combustion vers le premier état de combustion d'abord dans un cylindre dont la chambre de combustion a le rapport air/carburant le plus petit.

14. Moteur à combustion interne selon la revendication 5 à 10, **caractérisé en :**
**ce que** le moteur à combustion interne est muni d'un moyen de détection pour détecter les vitesses du moteur dans les cylindres respectifs pendant la combustion ; et
qu'on réalise une opération de commutation depuis le deuxième état de combustion vers le premier état de combustion dans un cylindre qui a la vitesse moteur la plus élevée pendant la combustion.
